# EUROPEAN PATENT SPECIFICATION

(11) **EP 3 721 664 B1**
(45) Date of publication and mention of the grant of the patent: **24.05.2023**
(21) Application number: 18899362.0
(22) Date of filing: 10.01.2018
(51) Int. Cl.: H04W 72/04, H04W 88/04, H04W 92/18

(54) **METHODS, APPARATUS AND SYSTEMS FOR DEVICE-TO-DEVICE COMMUNICATIONS**
VERFAHREN, EINRICHTUNG UND SYSTEME FÜR VORRICHTUNG-ZU-VORRICHTUNG-KOMMUNIKATIONEN
PROCÉDÉS, APPAREILS ET SYSTÈMES DE COMMUNICATIONS DE DISPOSITIFS À DISPOSITIFS

(43) Date of publication of application: 14.10.2020
(73) Proprietor: ZTE Corporation, shenzhen Guangdong 518057 (CN)
(72) Inventor: HUANG, Shuanghong, Shenzhen, Guangdong 518057 (CN); LU, Youxiong, Shenzhen, Guangdong 518057 (CN); XING, Weimin, Shenzhen, Guangdong 518057 (CN)
(74) Representative: Vossius & Partner Patentanwälte Rechtsanwälte mbB
(86) International application number: PCT/CN2018/072058
(87) International publication number: WO 2019/136626

(56) References cited:
- EP-A1- 2 988 565
- WO-A1-2009/120123
- WO-A1-2014/105387
- WO-A1-2016/148543
- WO-A1-2017/193943
- US-A1- 2016 020 875
- HUAWEI ET AL: "Discussion on carrier aggregation for R15 sidelink", 3GPP DRAFT; R1-1707034, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 14 May 2017 (2017-05-14), XP051272264, Retrieved from the Internet: URL:http://www.3gpp.org/ftp/Meetings_3GPP_ SYNC/RAN1/Docs/ [retrieved on 2017-05-14]
- ZTE: "Discussion on relay discovery of bandwidth limited remote UE", 3GPP DRAFT; R2-1708513 DISCUSSION ON SIDELINK DISCOVERY OF BANDWIDTH LIMITED REMOTE UE, 3RD GENERATION PARTNERSHIP PROJECT (3GPP), MOBILE COMPETENCE CENTRE ; 650, ROUTE DES LUCIOLES ; F-06921 SOPHIA-A , vol. RAN WG2, no. Berlin, Germany; 20170821 - 20170825 20 August 2017 (2017-08-20), XP051318368, Retrieved from the Internet: URL:http://www.3gpp.org/ftp/Meetings_3GPP_ SYNC/RAN2/Docs/ [retrieved on 2017-08-20]

## Description

### TECHNICAL FIELD

The disclosure relates generally to wireless communications and, more particularly, to methods and apparatus for device-to-device communications.

### BACKGROUND

Wireless networking systems have become a prevalent means by which a majority of people worldwide have come to communicate. A typical wireless communication network (e.g., employing frequency, time, and/or code division techniques) includes one or more base stations (typically known as a "BS") that each provides a geographical radio coverage, and one or more wireless user equipment devices (typically know as a "UE") that can transmit and receive data within the radio coverage. A device-to-device (D2D) communication can be realized based on sidelink communications between two UEs.

A FeD2D (further enhancements to LTE D2D) network supports IoT (Internet of Things) devices (UEs) and wearables devices (UEs), including narrow bandwidth (NB) remote UEs with limited bandwidth. For example, a remote UE with a limited bandwidth of 1 physical resource block (PRB) can work only within the bandwidth of 1 PRB at a time.

In existing Narrow Band Internet of Things (NB-IoT) based cellular networks, a narrowband UE (NB UE) performs cell search on an anchor carrier to obtain downlink synchronization, while the data transmission can be performed on a non-anchor carrier. The NB UE may receive configuration signaling from the BS to obtain indication to determine the non-anchor carriers and available resources on the non-anchor carriers.

In an existing D2D network, there is no solution to enable a remote UE with a limited bandwidth (e.g. of 1 PRB) to obtain information about discovery and/or communication resource pools, or to enable a sidelink communication between a relay UE and the remote UE with a limited bandwidth. Thus, existing systems and methods for D2D communications are not entirely satisfactory.

WO 2016/148543 A1 relates to a method and device for establishing relay connections in a D2D broadcast communication-based network.

### SUMMARY OF THE INVENTION

The invention is specified by the independent claims. Preferred embodiments are defined in the dependent claims. The exemplary embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

### BRIEF DESCRIPTION OF THE DRAWINGS

Various exemplary embodiments of the present disclosure are described in detail below with reference to the following Figures. The drawings are provided for purposes of illustration only and merely depict exemplary embodiments of the present disclosure to facilitate the reader's understanding of the present disclosure. Therefore, the drawings should not be considered limiting of the breadth, scope, or applicability of the present disclosure. It should be noted that for clarity and ease of illustration these drawings are not necessarily drawn to scale.
FIG. 1 illustrates an exemplary communication network in which techniques disclosed herein may be implemented, in accordance with an embodiment of the present disclosure.
FIG. 2 illustrates a block diagram of a relay user equipment (UE), in accordance with some embodiments of the present disclosure.
FIG. 3 illustrates a flow chart for a method performed by a relay UE for device-to-device (D2D) communications, in accordance with some embodiments of the present disclosure.
FIG. 4 illustrates a block diagram of a remote UE, in accordance with some embodiments of the present disclosure.
FIG. 5 illustrates a flow chart for a method performed by a remote UE for D2D communications, in accordance with some embodiments of the present disclosure.
FIG. 6 illustrates exemplary resource sequences on different carriers for a D2D communication, in accordance with an embodiment of the present disclosure.
FIG. 7 illustrates an exemplary set of parameters indicated by a first indication message in a D2D communication, in accordance with an embodiment of the present disclosure.
FIG. 8 illustrates another exemplary set of parameters indicated by a first indication message in a D2D communication, in accordance with an embodiment of the present disclosure.
FIG. 9 illustrates an exemplary resource pool indicated by a second indication message in a D2D communication, in accordance with an embodiment of the present disclosure.
FIG. 10 illustrates a method for indicating a transmission resource or a transmission resource pool to be used for transmitting a first indication message, in accordance with an embodiment of the present disclosure.
FIG. 11 illustrates an exemplary method for indicating a first resource pool on a first carrier using a first indication message, in accordance with an embodiment of the present disclosure.
FIG. 12 illustrates another exemplary method for indicating a first resource pool on a first carrier using a first indication message, in accordance with an embodiment of the present disclosure.
FIG. 13 illustrates an exemplary method for indicating a second resource pool on a second carrier using a second indication message, in accordance with an embodiment of the present disclosure.
FIG. 14 illustrates an exemplary method for scheduling resources for a D2D unicast communication, in accordance with an embodiment of the present disclosure.

### DETAILED DESCRIPTION OF EXEMPLARY EMBODIMENTS

Various exemplary embodiments of the present disclosure are described below with reference to the accompanying figures to enable a person of ordinary skill in the art to make and use the present disclosure. As would be apparent to those of ordinary skill in the art, after reading the present disclosure, various changes or modifications to the examples described herein can be made without departing from the scope of the present disclosure. Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

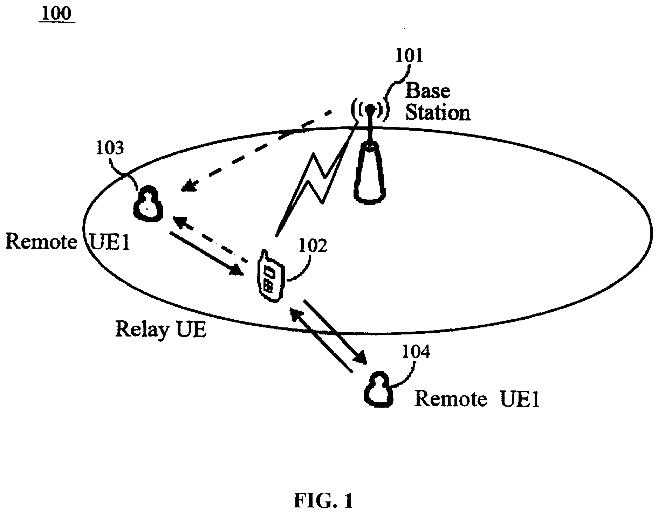

In a FeD2D (further enhancements to D2D) network, the user equipment devices (UEs) participating in the D2D sidelink communications include relay UEs and remote UEs. A remote UE may be in the network coverage, or outside the network coverage but communicate with the cellular network by the relaying of a relay UE, as shown in FIG. 1.

FIG. 1 illustrates an exemplary communication network 100 in which techniques disclosed herein may be implemented, in accordance with an embodiment of the present disclosure. The network 100 may be a D2D or FeD2D network that includes a base station (BS) 101, a relay UE 102, and one or more remote UEs 103, 104. The relay UE 102 is within the network coverage of the BS. Each remote UE may be within or outside the network coverage of the BS. The remote UEs may be Internet of Things (IoT) devices and/or wearable devices. These devices may include narrowband UEs, e.g. the remote UE2 104 having a limited bandwidth of 1 physical resource block (PRB).

In existing Narrow Band Internet of Things (NB-IoT) based cellular networks, a narrowband UE (NB UE) performs cell search on an anchor carrier to obtain downlink synchronization, while the data transmission can be performed on a non-anchor carrier. The NB UE may receive configuration signaling from the BS to obtain indication to determine the non-anchor carriers. For the FeD2D technology, a remote UE may be a narrowband UE having limited bandwidth. If the narrowband remote UE is within the network coverage of the BS, existing methods are not entirely satisfactory for D2D communication and/or discovery. If the narrowband remote UE is outside the network coverage of the BS, the narrowband remote UE cannot obtain information of the non-anchor carriers or resource information of the non-anchor carriers by receiving the configuration signaling from the BS. There is no corresponding solution in existing FeD2D technology for that.

In view of the above problem, the present disclosure provides systems and methods for a device-to-device (e.g. FeD2D) communication with limited bandwidth. The disclosed method can enable a remote UE with a limited bandwidth (e.g. of 1 PRB) to obtain information about discovery and/or communication resource pools, or to enable a sidelink communication between a relay UE and the remote UE with a limited bandwidth.

The methods disclosed in the present teaching can be implemented in a wireless communication network, where a BS and a UE can communicate with each other via a communication link, e.g., via a downlink radio frame from the BS to the UE or via an uplink radio frame from the UE to the BS. In various embodiments, a BS in the present disclosure can include, or be implemented as, a next Generation Node B (gNB), an E-UTRAN Node B (eNB), a Transmission/Reception Point (TRP), an Access Point (AP), etc.; while a UE in the present disclosure can include, or be implemented as, a mobile station (MS), a station (STA), etc. A BS and a UE may be described herein as non-limiting examples of "wireless communication nodes," and "wireless communication devices" respectively, which can practice the methods disclosed herein and may be capable of wireless and/or wired communications, in accordance with various embodiments of the present disclosure.

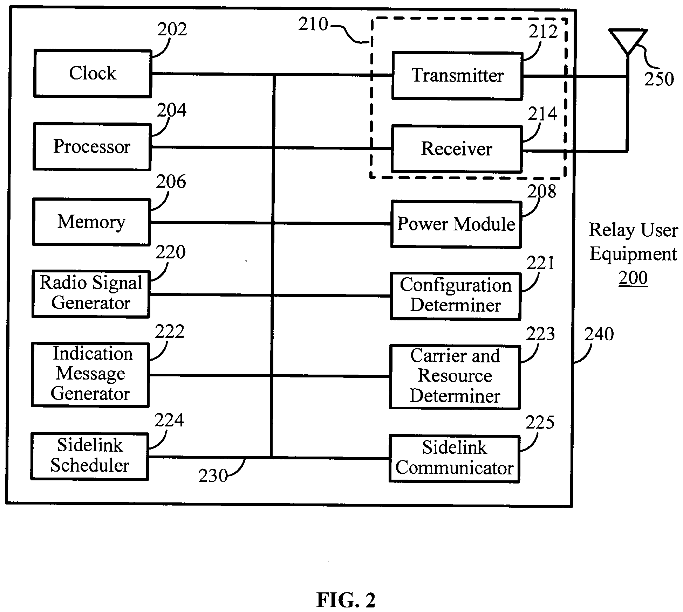

FIG. 2 illustrates a block diagram of a relay user equipment (UE) 200, in accordance with some embodiments of the present disclosure. The relay UE 200 is an example of a device that can be configured to implement the various methods described herein. As shown in FIG. 2, the relay UE 200 includes a housing 240 containing a system clock 202, a processor 204, a memory 206, a transceiver 210 comprising a transmitter 212 and receiver 214, a power module 208, a radio signal generator 220, a configuration determiner 221, an indication message generator 222, a carrier and resource determiner 223, a sidelink scheduler 224, and a sidelink communicator 225.

In this embodiment, the system clock 202 provides the timing signals to the processor 204 for controlling the timing of all operations of the relay UE 200. The processor 204 controls the general operation of the relay UE 200 and can include one or more processing circuits or modules such as a central processing unit (CPU) and/or any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable circuits, devices and/or structures that can perform calculations or other manipulations of data.

The memory 206, which can include both read-only memory (ROM) and random access memory (RAM), can provide instructions and data to the processor 204. A portion of the memory 206 can also include non-volatile random access memory (NVRAM). The processor 204 typically performs logical and arithmetic operations based on program instructions stored within the memory 206. The instructions (a.k.a., software) stored in the memory 206 can be executed by the processor 204 to perform the methods described herein. The processor 204 and memory 206 together form a processing system that stores and executes software. As used herein, "software" means any type of instructions, whether referred to as software, firmware, middleware, microcode, etc. which can configure a machine or device to perform one or more desired functions or processes. Instructions can include code (e.g., in source code format, binary code format, executable code format, or any other suitable format of code). The instructions, when executed by the one or more processors, cause the processing system to perform the various functions described herein.

The transceiver 210, which includes the transmitter 212 and receiver 214, allows the relay UE 200 to transmit and receive data to and from a remote device (e.g., a BS or another UE). An antenna 250 is typically attached to the housing 240 and electrically coupled to the transceiver 210. In various embodiments, the relay UE 200 includes (not shown) multiple transmitters, multiple receivers, and multiple transceivers. In one embodiment, the antenna 250 is replaced with a multi-antenna array 250 that can form a plurality of beams each of which points in a distinct direction. The transmitter 212 can be configured to wirelessly transmit packets having different packet types or functions, such packets being generated by the processor 204. Similarly, the receiver 214 is configured to receive packets having different packet types or functions, and the processor 204 is configured to process packets of a plurality of different packet types. For example, the processor 204 can be configured to determine the type of packet and to process the packet and/or fields of the packet accordingly.

In a wireless network, while the relay UE 200 is within a coverage of a base station, it can communicate with a remote UE that is outside or within the coverage of the base station. In one embodiment, the remote UE has a limited bandwidth of one physical resource block. The radio signal generator 220 in this example may generate a radio signal, which may include a sidelink radio signal used for synchronization between the relay UE 200 and the remote UE (e.g., sidelink synchronization signal (SLSS)), and/or a physical sidelink broadcast channel (PSBCH) that carries indication information for the remote UE. In one embodiment, the PSBCH may indicate a transmission resource or a transmission resource pool to be used for the relay UE 200 to transmit an anchor carrier resource pool indication message, referred to as a first message. The radio signal generator 220 may broadcast, via the transmitter 212, the radio signal on a first carrier, which may be an anchor carrier, such that any remote UE can receive the radio signal by searching. In one embodiment, the radio signal comprises information about at least one of the following: a starting offset of the transmission resource or the transmission resource pool relative to a resource used for transmitting the radio signal; a length of the transmission resource pool in time domain; a quantity of sub-frames included in the transmission resource pool; a bitmap corresponding to the sub-frames included in the transmission resource pool; and a quantity of bitmap repetitions. In another embodiment, the transmission resource or the transmission resource pool is determined based on at least one of: a configuration; a pre-configuration; and a pre-definition. The pre-definition comprises at least one of the following: the transmission resource used for the first message is fixed; and the starting offset of the transmission resource used for the first message relative to the resource used for transmitting the radio signal is fixed.

The indication message generator 222 in this example may generate a first message. The first message comprises information about a first resource pool set on the first carrier, the first resource pool set includes at least one first resource pool. In one embodiment, the first message may also include a second carrier and/or a second resource pool set on the second carrier, wherein the second resource pool set comprises at least one second resource pool. The information about the first resource pool set comprises information about at least one of the following: a device-to-device (D2D) discovery resource pool of the relay UE 200 on the first carrier; a D2D discovery resource pool of the remote UE on the first carrier; a D2D communication resource pool of the relay UE 200 on the first carrier; and a D2D communication resource pool of the remote UE on the first carrier. In one embodiment, the D2D discovery resource pool comprises at least one of the following: the D2D discovery transmission pool; and the D2D discovery reception pool; the D2D communication resource pool comprises at least one of the following: the D2D communication transmission pool; the D2D communication reception pool; the D2D communication control resource pool; and the D2D communication data resource pool. In one embodiment, the first message is valid within a resource period for transmitting the radio signal and comprises information about at least one of the following: one or more starting offsets of one or more first resource pools relative to the resource used for transmitting the radio signal; one or more lengths of one or more first resource pools in time domain; one or more bitmaps corresponding to sub-frames included in one or more first resource pools; and one or more numbers of bitmap repetitions. In another embodiment, the first message is valid within a first carrier resource pool period and comprises information about at least one of the following: the first carrier resource pool period; one or more starting offsets of one or more first resource pools within the first carrier resource pool period; one or more starting offsets of one or more first resource pools relative to System Frame Number 0 (SFN 0); one or more length of one or more first resource pools in time domain; one or more bitmaps corresponding to sub-frames included in one or more first resource pools; and one or more numbers of bitmap repetitions.

The indication message generator 222 in this example may also generate a second message that comprises information about a second carrier and a second resource pool set on the second carrier, the second resource pool set includes at least one second resource pool. In one embodiment, the information about the second carrier comprises information about at least one of the following: an index of the second carrier; an index of a physical resource block (PRB) corresponding to the second carrier; and an offset value of a first PRB index corresponding to the second carrier relative to a second PRB index corresponding to the first carrier. In another embodiment, the information about the second resource pool set comprises information about at least one of the following: a device-to-device (D2D) discovery resource pool of the relay UE; a D2D discovery resource pool of the remote UE; a D2D communication resource pool of the relay UE; a D2D communication resource pool of the remote UE; and a dedicated resource pool for scheduling request of the remote UE on the second carrier. In one embodiment, a D2D discovery resource pool comprises at least one of the following: a D2D discovery transmission pool; and the D2D discovery reception pool; a D2D communication resource pool comprises at least one of the following: a D2D communication transmission pool; a D2D communication reception pool; a D2D communication control resource pool; and a D2D communication data resource pool. The second message comprises information about at least one of the following: a second carrier resource pool period; one or more starting offsets of one or more second resource pools within the second carrier resource pool period; one or more starting offsets of one or more second resource pools relative to System Frame Number 0 (SFN 0); one or more lengths of one or more second resource pools in time domain; one or more bitmaps corresponding to sub-frames included in one or more second resource pools; and one or more numbers of bitmap repetitions. The indication message generator 222 may broadcast, via the transmitter 212, the first message on the first carrier; and transmit, via the transmitter 212, the second message using at least one resource in the first resource pool on the first carrier to the remote UE.

In one embodiment, the configuration determiner 221 can determine configuration or pre-configuration information, e.g. based on signaling and/or control information from the base station, and send the configuration or pre-configuration information to the carrier and resource determiner 223 for carrier and resource determination. In one example, the transmission resource or the transmission resource pool is determined based on the configuration or pre-configuration information. In another example, at least one of the first resource pool set and the second resource pool set is configured and/or pre-configured based on the configuration and/or pre-configuration information. In one embodiment, the configuration determiner 221 can determine a configured or preconfigured physical resource block (PRB) or carrier list, and send the configured or preconfigured PRB or carrier list to the carrier and resource determiner 223 for carrier and resource determination.

The carrier and resource determiner 223 in this example can determine the carriers and resources used to transmit a message or signal. For example, the carrier and resource determiner 223 can determine the first carrier as an anchor carrier; and determine the second carrier as a non-anchor carrier. In one embodiment, the carrier and resource determiner 223 can determine the transmission resource or the transmission resource pool, information about the first resource pool set and the second resource pool set, or information about the anchor carrier and non-anchor carriers, based on the configuration or pre-configuration information determined by the configuration determiner 221. In one embodiment, the carrier and resource determiner 223 can select, from the configured or preconfigured carrier list determined by the configuration determiner 221, a carrier as a working carrier for the remote UE. The carrier and resource determiner 223 may also measure a channel busy ratio (CBR) value on a PRB corresponding to the working carrier; compare the CBR value with a first threshold; and re-assign a new working carrier to the remote UE in response to the CBR value is greater than the first threshold, wherein a CBR value measured on a PRB corresponding to the new working carrier is less than a second threshold. In another embodiment, the carrier and resource determiner 223 can select, from the configured or preconfigured PRB list determined by the configuration determiner 221, a PRB as a working PRB for the remote UE. The carrier and resource determiner 223 may measure a CBR value on the working PRB; compare the CBR value with a first threshold; and re-assign a new working PRB to the remote UE in response to the CBR value is greater than the first threshold, wherein a CBR value measured on the new working PRB is less than a second threshold. The carrier and resource determiner 223 may send the determined resource and carrier corresponding to each transmission or reception of the relay UE 200 to the radio signal generator 220, the indication message generator 222, the sidelink scheduler 224, and the sidelink communicator 225.

The sidelink scheduler 224 in this example can schedule the sidelink communication between the relay UE 200 and the remote UE. For example, the sidelink scheduler 224 may transmit, via the transmitter 212, a scheduling message on the second carrier to the remote UE. The scheduling message indicates information about a scheduling resource for the remote UE. In another example, the side link scheduler 224 can receive, via the receiver 214, a scheduling request from the remote UE using at least one resource in a dedicated resource pool on the second carrier; allocate a scheduling resource to the remote UE in response to the scheduling request; and transmit, via the transmitter 212, information about the scheduling resource to the remote UE on the second carrier.

The sidelink communicator 225 in this example may communicate with the remote UE using at least one resource in at least one second resource pool on the second carrier. In one embodiment, the sidelink communicator 225 can receive device-to-device communication control and/or service data from the remote UE using the scheduling resource.

The power module 208 can include a power source such as one or more batteries, and a power regulator, to provide regulated power to each of the above-described modules in FIG. 2. In some embodiments, if the relay UE 200 is coupled to a dedicated external power source (e.g., a wall electrical outlet), the power module 208 can include a transformer and a power regulator.

The various modules discussed above are coupled together by a bus system 230. The bus system 230 can include a data bus and, for example, a power bus, a control signal bus, and/or a status signal bus in addition to the data bus. It is understood that the modules of the relay UE 200 can be operatively coupled to one another using any suitable techniques and mediums.

Although a number of separate modules or components are illustrated in FIG. 2, persons of ordinary skill in the art will understand that one or more of the modules can be combined or commonly implemented. For example, the processor 204 can implement not only the functionality described above with respect to the processor 204, but also implement the functionality described above with respect to the carrier and resource determiner 223. Conversely, each of the modules illustrated in FIG. 2 can be implemented using a plurality of separate components or elements.

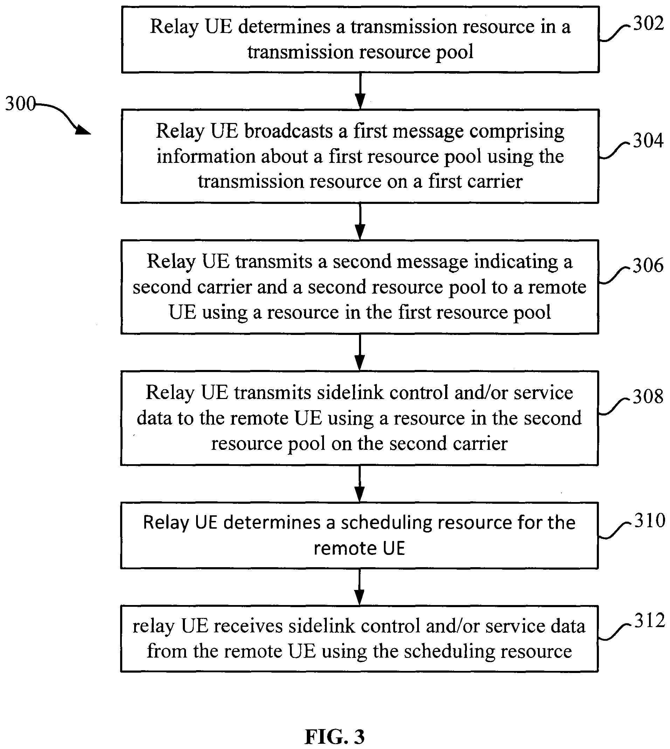

FIG. 3 illustrates a flow chart for a method 300 performed by a UE, e.g. the relay UE 200 in FIG. 2, for device-to-device (D2D) communications, in accordance with some embodiments of the present disclosure. At operation 302, the relay UE determines a transmission resource in a transmission resource pool. At operation 304, the relay UE broadcasts a first message comprising information about a first resource pool set using the transmission resource on a first carrier, the first resource pool set includes at least one first resource pool. The relay UE transmits at operation 306 a second message indicating a second carrier and a second resource pool set to one or more remote UEs using a resource in one first resource pool, the second resource pool set includes at least one second resource pool. At operation 308, the relay UE transmits sidelink control and/or service data to the one or more remote UEs using a resource in one second resource pool on the second carrier. The relay UE determines at operation 310 a scheduling resource for one or more remote UEs. The relay UE receives at operation 312 sidelink control and/or service data from the remote UE using the scheduling resource.

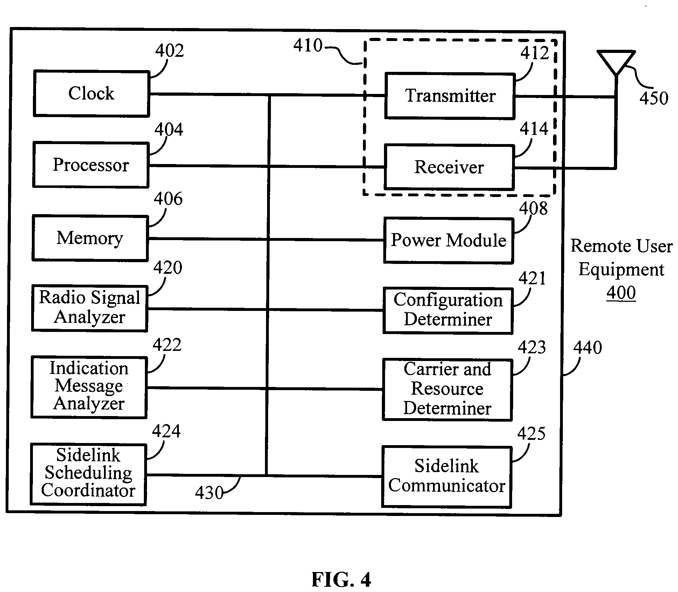

FIG. 4 illustrates a block diagram of a remote UE 400, in accordance with some embodiments of the present disclosure. The remote UE 400 is an example of a device that can be configured to implement the various methods described herein. As shown in FIG. 4, the remote UE 400 includes a housing 440 containing a system clock 402, a processor 404, a memory 406, a transceiver 410 comprising a transmitter 412 and a receiver 414, a power module 408, a radio signal analyzer 420, a configuration determiner 421, an indication message analyzer 422, a carrier and resource determiner 423, a sidelink scheduling coordinator 424, and a sidelink communicator 425.

In this embodiment, the system clock 402, the processor 404, the memory 406, the transceiver 410 and the power module 408 work similarly to the system clock 202, the processor 204, the memory 206, the transceiver 210 and the power module 208 in the relay UE 200. An antenna 450 or a multi-antenna array 450 is typically attached to the housing 440 and electrically coupled to the transceiver 410.

In a wireless network, the remote UE 400 may be outside or within a coverage of the base station. In one embodiment, the remote UE 400 has a limited bandwidth, e.g. a bandwidth of one physical resource block. The remote UE 400 may connect with the network coverage via the sidelink communication with a relay UE, e.g. the relay UE 200 that is within a coverage of a base station.

The radio signal analyzer 420 in this example may receive, via the receiver 414, a radio signal from the relay UE 200. The radio signal may include a sidelink radio signal used for synchronization (e.g., SLSS) between the relay UE 200 and the remote UE 400, and/or a physical sidelink broadcast channel (PSBCH) that carries indication information for the remote UE 400. In one embodiment, the PSBCH signal may indicate a transmission resource or a transmission resource pool to be used for the relay UE 200 to transmit an anchor carrier resource pool indication message, referred to as a first message. The relay UE 200 may broadcast the radio signal on a first carrier, which may be an anchor carrier, such that the remote UE 400 can receive the radio signal by searching. In one embodiment, the radio signal comprises information about at least one of the following: a starting offset of the transmission resource or the transmission resource pool relative to a synchronization resource used for transmitting the radio signal; a length of the transmission resource pool in time domain; a quantity of sub-frames included in the transmission resource pool; a bitmap corresponding to the sub-frames included in the transmission resource pool; and a quantity of bitmap repetitions.

The indication message analyzer 422 in this example may receive and analyze the first message on the first carrier from the relay UE 200. The first message comprises information about a first resource pool on the first carrier. The information about the first resource pool comprises information about at least one of the following: a D2D discovery resource pool of the relay UE 200 on the first carrier; a D2D discovery resource pool of the remote UE 400 on the first carrier; a D2D communication resource pool of the relay UE 200 on the first carrier; and a D2D communication resource pool of the remote UE 400 on the first carrier. In one embodiment, the D2D discovery resource pool comprises at least one of the following: a D2D discovery transmission pool; and a D2D discovery reception pool; the D2D communication resource pool comprises at least one of the following: a D2D communication transmission pool; a D2D communication reception pool; a D2D communication control resource pool; and a D2D communication data resource pool. In one embodiment, the first message is valid within a resource period for transmitting the radio signal and comprises information about at least one of the following: one or more starting offsets of one or more first resource pools relative to the resource used for transmitting the radio signal; one or more lengths of one or more first resource pools in time domain; one or more bitmaps corresponding to sub-frames included in one or more first resource pools; and one or more numbers of bitmap repetitions. In another embodiment, the first message is valid within a first carrier resource pool period and comprises information about at least one of the following: one or more starting offsets of one or more first resource pools relative to the resource used for transmitting the radio signal; one or more lengths of one or more first resource pools in time domain; one or more bitmaps corresponding to sub-frames included in one or more first resource pools; and one or more numbers of bitmap repetitions.

The indication message analyzer 422 in this example may also receive and analyze a second message using at least one resource in one first resource pool on the first carrier from the relay UE 200. In one embodiment, the information about the second carrier comprises information about at least one of the following: an index of the second carrier; an index of a PRB corresponding to the second carrier; and an offset value of a first PRB index corresponding to the second carrier relative to a second PRB index corresponding to the first carrier. In another embodiment, the information about the second resource pool comprises information about at least one of the following: a D2D discovery resource pool of the relay UE 200; a D2D discovery resource pool of the remote UE 400; a D2D communication resource pool of the relay UE 200; a D2D communication resource pool of the remote UE 400; and a dedicated resource pool for scheduling data transmission request of the remote UE 400 on the second carrier. In one embodiment, the D2D discovery resource pool comprises at least one of the following: a D2D discovery transmission pool; and a D2D discovery reception pool; the D2D communication resource pool comprises at least one of the following: a D2D communication transmission pool; a D2D communication reception pool; a D2D communication control resource pool; and a D2D communication data resource pool. The second message comprises information about at least one of the following: a second carrier resource pool period; one or more starting offsets of one or more second resource pools within the second carrier resource pool period; one or more starting offsets of one or more second resource pools relative to System Frame Number 0 (SFN 0); one or more lengths of one or more second resource pools in time domain; one or more bitmaps corresponding to sub-frames included in one or more second resource pools; and one or more numbers of bitmap repetitions.

In one embodiment, the indication message analyzer 422 may receive and analyze one message using a transmission resource on the first carrier from the relay UE 200. The message comprises information about the first resource pool on the first carrier, information about the second carrier, and information about the second resource pool on the second carrier.

In one embodiment, the configuration determiner 421 can determine configuration or pre-configuration information, e.g. based on signaling and/or control information from the base station or from the relay UE 200, and send the configuration or pre-configuration information to the carrier and resource determiner 423 for carrier and resource determination. In one example, the transmission resource or the transmission resource pool is determined based on the configuration or pre-configuration information. In another example, at least one of the first resource pool set and the second resource pool set is configured and/or pre-configured based on the configuration and/or pre-configuration information. In one embodiment, the configuration determiner 421 can determine a configured or preconfigured physical resource block (PRB) or carrier list, and send the configured or preconfigured PRB or carrier list to the carrier and resource determiner 423 for carrier and resource determination.

The carrier and resource determiner 423 in this example can determine the carriers and resources used to receive a message or signal. For example, the carrier and resource determiner 423 can determine the first carrier as an anchor carrier; and determine the second carrier as a non-anchor carrier. In one embodiment, the carrier and resource determiner 423 can determine the transmission resource or the transmission resource pool, information about the first resource pool set and the second resource pool set, or information about the anchor carrier and non-anchor carriers, based on the configuration or pre-configuration information determined by the configuration determiner 421. In one embodiment, the carrier and resource determiner 423 can select, from the configured or preconfigured carrier list determined by the configuration determiner 421, a carrier as a working carrier for the remote UE 400. The carrier and resource determiner 423 may also measure a channel busy ratio (CBR) value on a PRB corresponding to the working carrier; compare the CBR value with a first threshold; and request the relay UE 200 to re-assign a new working carrier to the remote UE 400 in response to the CBR value is greater than the first threshold, wherein a CBR value measured on a PRB corresponding to the new working carrier needs to be less than a second threshold. In another embodiment, the carrier and resource determiner 423 can select, from the configured or preconfigured PRB list determined by the configuration determiner 421, a PRB as a working PRB for the remote UE. The carrier and resource determiner 423 may measure a CBR value on the working PRB; compare the CBR value with a first threshold; and request the relay UE 200 to re-assign a new working PRB to the remote UE 400 in response to the CBR value is greater than the first threshold, wherein a CBR value measured on the new working PRB needs to be less than a second threshold. The carrier and resource determiner 423 may send the determined resource and carrier corresponding to each transmission or reception of the remote UE 400 to the radio signal analyzer 420, the indication message analyzer 422, the sidelink scheduling coordinator 424, and the sidelink communicator 425.

The sidelink scheduling coordinator 424 in this example can coordinate with the relay UE 200 to schedule the sidelink communication between the relay UE 200 and the remote UE 400. For example, the sidelink scheduling coordinator 424 may receive, via the receiver 414, a scheduling message on the second carrier from the relay UE 200. The scheduling message indicates information about a scheduling resource for the remote UE 400. In another example, the sidelink scheduling coordinator 424 can transmit, via the transmitter 412, a scheduling request to the relay UE 200 using at least one resource in a dedicated resource pool on the second carrier; and receive, via the receiver 414, information about a scheduling resource allocated by the relay UE 200 to the remote UE 400 in response to the scheduling request.

The sidelink communicator 425 in this example may communicate with the relay UE 200 using at least one resource in one second resource pool on the second carrier. In one embodiment, the sidelink communicator 425 can transmit, via the transmitter 412, device-to-device communication control and/or service data to the relay UE 200 based on the scheduling resource.

The various modules discussed above are coupled together by a bus system 430. The bus system 430 can include a data bus and, for example, a power bus, a control signal bus, and/or a status signal bus in addition to the data bus. It is understood that the modules of the remote UE 400 can be operatively coupled to one another using any suitable techniques and mediums.

Although a number of separate modules or components are illustrated in FIG. 4, persons of ordinary skill in the art will understand that one or more of the modules can be combined or commonly implemented. For example, the processor 404 can implement not only the functionality described above with respect to the processor 404, but also implement the functionality described above with respect to the carrier and resource determiner 423. Conversely, each of the modules illustrated in FIG. 4 can be implemented using a plurality of separate components or elements.

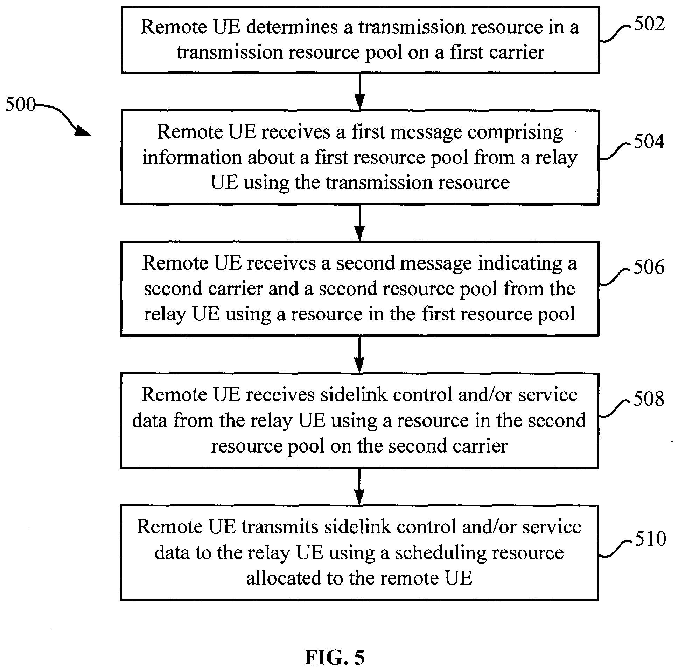

FIG. 5 illustrates a flow chart for a method 500 performed by a UE, e.g. the remote UE 400 in FIG. 4, for D2D communications, in accordance with some embodiments of the present disclosure. At operation 502, the remote UE determines a transmission resource in a transmission resource pool on a first carrier. At operation 504, the remote UE receives a first message comprising information about a first resource pool set from a relay UE using the transmission resource, the first resource pool set includes at least one first resource pool. The remote UE receives at operation 506 a second message indicating a second carrier and a second resource pool set from the relay UE using a resource in one first resource pool, the second resource pool set includes at least one second resource pool. The remote UE receives at operation 508 sidelink control and/or service data from the relay UE using a resource in one second resource pool on the second carrier. At operation 510, the remote UE transmits sidelink control and/or service data to the relay UE using a scheduling resource allocated to the remote UE. The scheduling resource may be included in the sidelink control received by the remote UE at operation 508.

Different embodiments of the present disclosure will now be described in detail hereinafter. It is noted that the features of the embodiments and examples in the present disclosure may be combined with each other in any manner without conflict.

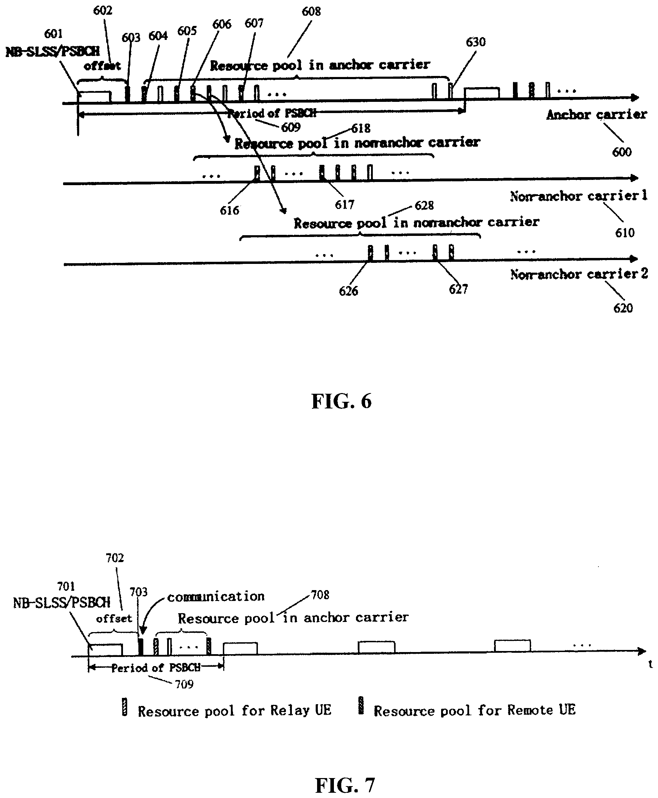

FIG. 6 illustrates exemplary resource sequences on different carriers for a D2D communication, in accordance with an embodiment of the present disclosure. As shown in FIG. 6, a relay UE (which is a relay user) can transmit a radio signal 601 on a first carrier 600. The radio signal 601 may include a narrowband sidelink synchronization signal (NB-SLSS) and a narrowband physical sidelink broadcast channel (NB-PSBCH). The first carrier 600 may be an anchor carrier. The NB-PSBCH carries indication to indicate information of a transmission resource or a transmission resource pool for an anchor carrier resource pool indication message 603, which may be referred to as a first indication message. The anchor carrier resource pool indication message 603 indicates information of a D2D discovery resource pool and/or a D2D communication resource pool of a relay UE and/or a remote UE on an anchor carrier. The transmission resource pool information is used for transmitting an anchor carrier resource indication message 603. As shown in FIG. 6, the anchor carrier resource pool indication message 603 can indicate a first resource pool 608 on an anchor carrier, where the first resource pool 608 includes a D2D discovery resource pool 604 of a relay UE, a D2D discovery resource pool 605 of a remote UE, a D2D communication resource pool 606 of a relay UE, and a D2D communication resource pool 607 of a remote UE.

A resource disclosed herein refers to a radio resource occupied when a wireless message or a wireless signal is transmitted. A resource pool disclosed herein refers to a set of radio resources, including one or more radio resources that can be used for transmitting wireless messages and/or signals. The NB-PSBCH signal may indicate a resource or a resource pool for transmitting the first indication message 603. If the NB-PSBCH signal indicates a resource pool for transmitting the first indication message 603, the relay UE may select a resource from the resource pool to transmit the first indication message 603.

The NB-PSBCH signal may indicate a resource (or resource pool) based on at least one of the following: a starting offset (in terms of time units like milliseconds or sub-frames) of a resource (or resource pool), such as an offset 602 relative to a synchronization resource (i.e. offset of a starting position of a resource (or resource pool) in a synchronization resource period 609), a time domain length of the resource pool (in terms of time units like milliseconds or sub-frames), the number of sub-frames included in a resource pool, the bitmap corresponding to the sub-frames included in the resource pool, and the number of bitmap repetitions. Here, the synchronization resource refers to the resource for transmitting the NB-SLSS and/or NB-PSBCH.

The relay UE transmits, according to the resource (or resource pool) indicated in NB-PSBCH as described above, an anchor carrier resource pool indication message 603 on the resource (or in resource pool). The anchor carrier resource pool indication message is carried through a D2D communication broadcast service channel, e.g. a physical sidelink shared channel (PSSCH), or a dedicated channel, for indicating information of a D2D discovery resource pool and/or a D2D communication resource pool of the relay UE and/or the remote UE on the anchor carrier. For example, assuming that the offset of the resource pool indicating the anchor carrier resource pool indication message in NB-PSBCH is N sub-frames, the resource pool has a time domain length of n sub-frames, the length of the bitmap is n, and the bits have values of 1, the relay UE transmits the sidelink control information (SCI) and the data of the D2D communication by select resource in consecutive n sub-frames subsequent to the delay of N sub-frames relative to the synchronization resource, after transmitting the NB-SLSS / NB-PSBCH. The data carries information indicating a D2D discovery resource pool and/or a D2D communication resource pool on the anchor carrier of the relay UE and/or the remote UE. In another embodiment, the data also carries information indicating a non-anchor carrier and/or a D2D discovery resource pool and/or a D2D communication resource pool on the non-anchor carrier of the relay UE and/or the remote UE. After obtaining the sidelink timing synchronization, the remote UE parses and analyzes the contents of the NB-PSBCH to obtain the indicated offset values N and n, receives the SCI of the D2D communication in consecutive n sub-frames subsequent to the delay of N sub-frames relative to the synchronization resource according to the N value, and then obtains the information for parsing the service data by solving the SCI, and parses the content of the corresponding service data to obtain the information of discovery resource pool and/or the D2D communication resource pool of the relay UE and/or the remote UE on the anchor carrier. Alternatively, the scheduling information (for example, MCS, resource size, etc.) of the D2D communication data is a fixed value, and the relay UE directly transmits the D2D communication data according to the resource corresponding to the offset value indicated in the NB-PSBCH. The remote UE parses and analyzes the service data from the corresponding resource according to the offset value indicated in the NB-PSBCH to obtain the information of the discovery resource pool and/or the D2D communication resource pool of the relay UE and/or the remote UE on the anchor carrier. In one embodiment, the delay value N may also be configured, pre-configured, or fixed.

In one example, the information content carried in the anchor carrier resource pool set indication message includes at least one of the following: the transmission resource pool information of the D2D discovery signal of the relay UE at the anchor carrier, the transmission resource pool information of the D2D discovery signal of the remote UE at the anchor carrier, the transmission resource pool information of the D2D communication of the relay UE at the anchor carrier, the transmission resource pool information of the D2D communication of the remote UE at the anchor carrier, the reception resource pool information of the D2D discovery signal of the relay UE at the anchor carrier, the reception resource pool information of the D2D discovery signal of the remote UE at the anchor carrier, the reception resource pool information of the D2D communication of the relay UE at the anchor carrier, the reception resource pool information of the D2D communication of the remote UE at the anchor carrier. The above mentioned resource pools may be overlapped to each other.

In one embodiment of the present teaching, the indication manner of the anchor carrier resource pool indication message includes: with the synchronization resource period 709 as the resource indication period, the content of the anchor carrier resource pool indication message 703 is valid within the current synchronization resource period 709 where the anchor carrier resource indication message 703 is transmitted. FIG. 7 illustrates an exemplary set of indication parameters indicated by a first indication message 703 in a D2D communication, in accordance with an embodiment of the present disclosure. As shown in FIG. 7, the indication parameters may include at least one of the following: an offset of the resource pool within the synchronization resource period 709, bitmap content, and the number of bitmap repetitions.

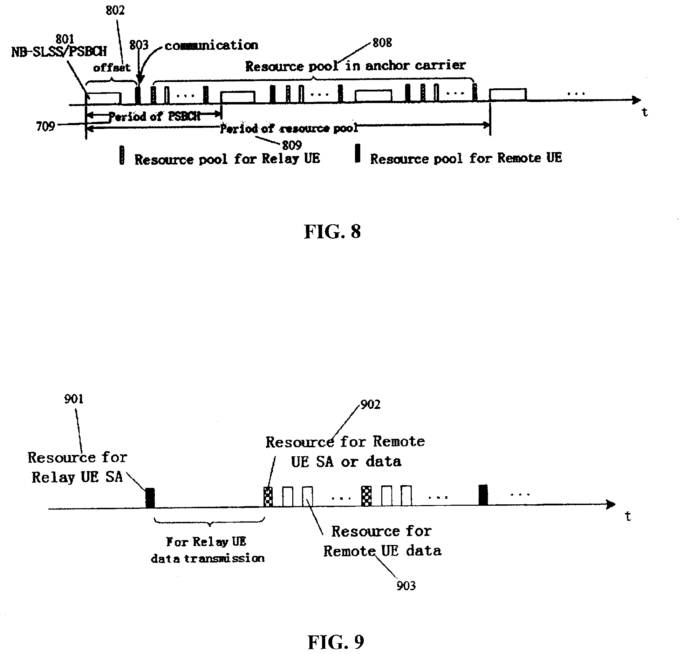

In one embodiment of the present teaching, the indication manner of the anchor carrier resource pool indication message further includes: taking the anchor carrier resource pool period 809 as the indication period, the anchor carrier resource pool indication message 803 is valid within the anchor carrier resource pool period 809. FIG. 8 illustrates another exemplary set of parameters indicated by a first indication message 803 in a D2D communication, in accordance with an embodiment of the present disclosure. As shown in FIG. 8, the indication parameters include at least one of the following: a resource pool period 809, an offset of a resource pool 808 starting position relative to SFN0 (sub-frame #0), bitmap content, and the number of bitmap repetitions (which may also be obtained by calculation).

The relay UE may transmit an indication message (which may be referred to as a second indication message) indicating non-anchor carrier resource pool in the D2D communication transmission resource pool of the anchor carrier. The second indication message indicates information of a non-anchor carrier (second carrier) available to at least one target remote UE and resource pool information of a relay UE and/or a remote UE corresponding to the non-anchor carrier via a D2D communication with the target remote UE. As shown in FIG. 6, each second indication message 606 indicates information of a non-anchor carrier 610, 620, and a resource pool set on the non-anchor carrier. The resource pool set includes at least one resource pool.

A physical channel carrying the second indication message may be a physical sidelink control channel (PSCCH), a physical sidelink shared channel (PSSCH), and/or a newly defined physical channel. The information content carried in the D2D communication includes at least one of the followings: the non-anchor carrier information 610, 620 corresponding to the target remote UE, the resource pool information 616, 626 used by the relay UE for the D2D communication on the corresponding non-anchor carrier, and the resource pool information 617, 627 used by the remote UE for the D2D communication on the corresponding non-anchor carrier. For different remote UEs allocated to a same non-anchor carrier, the resource pool information may the same or different.

In one embodiment of the present teaching, the content of the non-anchor carrier resource pool indication message includes at least one of the following: an index of the non-anchor carrier, an index of a PRB corresponding to the non-anchor carrier, or an offset value of a first PRB index corresponding to the non-anchor carrier and a second PRB index corresponding to the anchor carrier, where the PRB index refers to an index based on a granularity of PRB in the system bandwidth corresponding to the PRB.

In one embodiment of the present teaching, the resource pool content indicated by the non-anchor carrier resource pool indication message includes at least one of the following: the control transmission resource pool of the relay UE on the non-anchor carrier, the data transmission resource pool of the relay UE on the non-anchor carrier, the control transmission resource pool of the remote UE on the non-anchor carrier, and the data transmission resource pool of the remote UE on the non-anchor carrier.

In one embodiment of the present teaching, the resource pool content indicated by the non-anchor carrier resource pool indication message includes at least one of the following: the control transmission resource pool and the data transmission resource pool of the remote UE on the non-anchor carrier, a dedicated resource pool for scheduling request of the remote UE. The resources in the control transmission resource pool of the remote UE can be scheduled for transmitting data, as shown in FIG. 9. The dedicated resource pool for remote UE scheduling request can only be used to transmit the scheduling request when the remote UE actively transmits data.

FIG. 9 illustrates an exemplary resource pool indicated by a second indication message in a D2D communication, in accordance with an embodiment of the present disclosure. As shown in FIG. 9, the resource 901 is for relay UE control transmission, the resource 902 is for remote UE control and/or data transmission, and the resource 903 is for remote UE data transmission.

In one embodiment of the present teaching, the indication parameters of the resource pool on the non-anchor carrier may include at least one of the following: a length of the resource pool period, an offset of the resource pool starting position relative to SFN0, bitmap content, and the number of bitmap repetitions.

In one embodiment of the present teaching, the relay UE transmits a scheduling message of the remote UE on the non-anchor carrier, indicating information of the scheduling resource of the remote UE. The scheduling message is transmitted over a physical channel of the D2D communication (e.g. PSCCH and/or PSSCH) or over a newly defined physical channel. The remote UE transmits service data of a D2D communication on the indicated scheduling resource according to the received scheduling message. This service data transmission may be based on broadcast, unicast, or multicast. The scheduling resource may include resources used for re-transmission in the D2D communication.

In one embodiment of the present teaching, when the remote UE needs to initiate data transmission, the remote UE selects resources from the dedicated resource pool for remote UE scheduling request to transmit a scheduling request on the non-anchor carrier. The scheduling request is carried over a physical channel of the D2D communication (e.g. PSCCH and/or PSSCH) or over a newly defined physical channel.

In one embodiment of the present teaching, the anchor carrier resource pool indication message, i.e. the first indication message, indicates information of the D2D discovery resource pool and the D2D communication resource pool on both the anchor carriers and the non-anchor carriers.

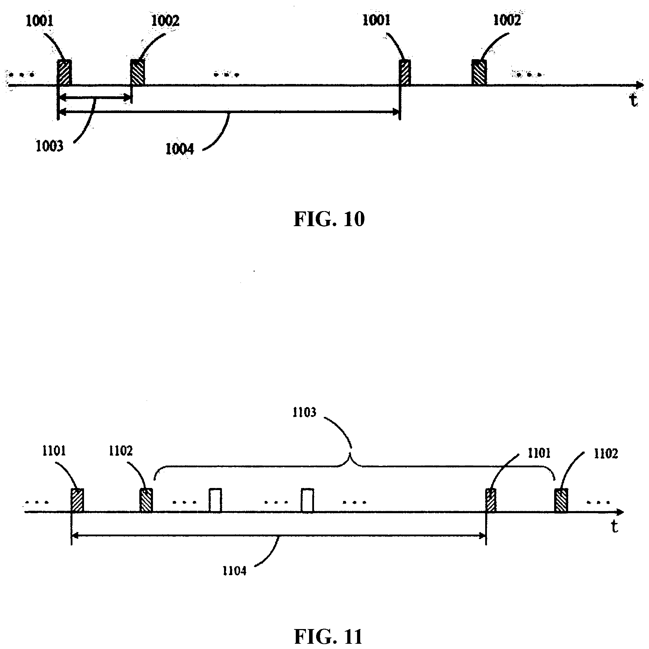

In a first embodiment, the relay UE transmits NB-PSBCH on the radio resources on an anchor carrier. The NB-PSBCH carries indication information to indicate transmission resource information or resource pool information of the anchor carrier resource pool indication message, as shown in FIG. 10. FIG. 10 illustrates a method for indicating a transmission resource or a transmission resource pool to be used for transmitting a first indication message, in accordance with an embodiment of the present disclosure. As shown in FIG. 10, the relay UE transmits the NB-PSBCH on the radio resource 1001, where time period 1004 is a transmission period of the NB-PSBCH. The NB-PSBCH carries indication information indicating the information of the radio resource 1002 that is used to transmit the anchor carrier resource pool indication message. The radio resource 1002 includes one or more radio frames, sub-frames, or SC-FDMA symbols in the time domain. In one embodiment, the radio resource 1002 is fixed in the frequency domain to a frequency range of a PRB corresponding to an anchor carrier (referred to as anchor carrier PRB). The anchor carrier resource pool indication message described in this embodiment is used for indicating the information of resource pools available to the relay UE and/or the remote UE on the anchor carrier, and is transmitted by the relay UE in the radio resource 1002. The radio resource 1002 may have a fixed size of a resource occupied for transmitting the anchor carrier resource pool indication message, or have a size larger than that of the resource occupied for transmitting the anchor carrier resource pool indication message. In one embodiment, the radio resource 1002 may be a set of multiple resources occupied for transmitting the anchor carrier resource pool indication messages. The relay UE may select a resource from the radio resource set 1002 for transmitting an anchor carrier resource pool indication message. The resource may be selected randomly or may be selected based on the identification information of the relay UE.

A manner of indicating a radio resource 1002 used for transmitting an anchor carrier resource pool indication message includes: indicating a time-domain offset of the radio resource 1002 relative to a radio resource 1001 used for transmitting NB-PSBCH by the relay UE, as the offset 1003 shown in FIG. 10. For example, in units of sub-frame, the offset between the radio resource 1002 and the radio resource 1001 may be indicated by 5 bits (b4b3b2blb0) in NB-PSBCH. When the value of b4b3b2blb0 is 00011, the indicated offset is 3 sub-frames. That is, the time offset of the sub-frame used for transmitting the anchor carrier resource pool indication message relative to the sub-frame for transmitting NB-PSBCH is 3 sub-frames. After the remote UE is synchronized on sidelink with the relay UE, the remote UE can read the content of the NB-PSBCH to obtain the offset, and receive the anchor carrier resource pool indication message in a sub-frame whose time-domain offset is 3 with respect to the sub-frame used for transmitting the NB-PSBCH. If the indicated offset is 1, the relay UE transmits the anchor carrier resource pool indication message in the next sub-frame of the sub-frame used for transmitting the NB-PSBCH.

The radio resource used for transmitting the anchor carrier resource indication message can also be indicated by means of a resource pool. As shown in FIG. 10, 1002 may also be a resource pool. The relay UE selects a resource from the resource pool 1002 to transmit the anchor carrier resource indication message. The resource may be selected randomly or may be selected based on the identification information of the relay UE. In this manner, the indication content in the NB-PSBCH includes a time offset of the start position of the resource pool 1002 relative to the resource 1001 and sub-frames included in the resource pool 1002. For example, in units of sub-frame, when the parameter N of the offset is 4, it means that the offset of the starting position of the resource pool 1002 in the time domain relative to the NB-PSBCH sub-frame is 4 sub-frames, and the time length of the resource pool is n consecutive sub-frames. In another example, the NB-PSBCH indicates the offset value N of a starting position of the resource pool 1002 relative to an NB-PSBCH sub-frame and a bitmap indicating valid sub-frames. The bits having a value of 1 in the bitmap correspond to the sub-frames included in the resource pool 1002. The bitmap is repeated in the transmission period 1004 of NB-PSBCH. In another example, the NB-PSBCH indicates the offset value N of the starting position of the resource pool 1002 relative to the NB-PSBCH sub-frame and the time-domain length m of the resource pool 1002, and a bitmap of an effective sub-frame. The bits having a value of 1 in the bitmap correspond to the sub-frames included in the resource pool 1002. The bitmap is valid only in the time length m of the resource pool 1002, and is repeated if the length of the bitmap is less than m.

Indicating a time-domain offset of the radio resource 1002 relative to a radio resource 1001 used for transmitting NB-PSBCH by the relay UE, as shown in 1003 in FIG. 10, may be in a manner of combining an indication of a sub-frame offset and an indication of a SC-FDMA symbol offset. For example, the anchor carrier resource pool indication message is transmitted on part of the SC-FDMA symbols in a sub-frame, where the radio resource 1002 is an SC-FDMA symbol used for transmitting the anchor carrier resource pool indication message. In the units of sub-frames and the SC-FDMA symbols, the offset of the radio resource 1002 relative to the radio resource 1001 in the NB-PSBCH is indicated by (m + n) bits, where m bit indicates the offset of the sub-frame in which the radio resource 1002 is located with respect to the sub-frame in which the radio resource 1001 is located, where n bit indicates the index of the SC-FDMA symbol used for transmitting the anchor carrier resource pool indication message or the index of the beginning SC-FDMA symbol, that is, the index of the radio resource 1002 with respect to the SC-FDMA symbol or with respect to the beginning SC-FDMA symbol within the current sub-frame.

In the first embodiment, the resource for transmitting the anchor carrier resource pool indication message or a resource pool containing the radio resource for transmitting the anchor carrier resource pool indication message may also be fixed or preconfigured. For example, the anchor carrier resource pool indication message is transmitted at a fixed sub-frame after the sub-frame used of transmitting the NB-PSBCH.

In a second embodiment, the relay UE transmits an anchor carrier resource pool indication message on the radio resources of the anchor carrier to indicate information about a discovery resource pool and/or a D2D communication resource pool of the relay UE and/or the remote UE on the anchor carrier. A manner for indicating an anchor carrier resource pool is using the NB-PSBCH resource period or a time interval between two consecutive transmissions of two anchor carrier resource pool indication messages as an indication period. That is, an anchor carrier resource pool indication message indicates information of an anchor carrier resource pool within a NB-PSBCH resource period or within the time interval 1104 between two consecutive transmissions of two anchor carrier resource pool indication messages, as shown in FIG. 11.

FIG. 11 illustrates an exemplary method for indicating a first resource pool 1103 on a first carrier using a first indication message 1102, in accordance with an embodiment of the present disclosure. As shown in FIG. 11, 1104 is a resource period of the NB-PSBCH, which is also referred to as a synchronization resource period. The anchor carrier resource pool indication message is transmitted on the radio resource 1102. The indicated content is valid within the range of 1103 or the range of 1104, where 1103 is a time interval between two resources used for consecutively transmitting two anchor carrier resource pool indication messages, respectively. After receiving the anchor carrier resource indication message, the remote UE determines resource pool information on the anchor carrier according to the indicated content, and updates the resource pool information on the anchor carrier after receiving the next anchor carrier resource indication message.

The content indicated by the anchor carrier resource pool indication message includes at least one of the following: the transmission resource pool information of the D2D discovery signal of the relay UE, the transmission resource pool information of the D2D discovery signal of the remote UE, the transmission resource pool information of the D2D communication of the remote UE, the transmission resource pool information of the D2D communication of the relay UE, the number of the remote UEs, remote UE identification information. The D2D communication resource pool includes a D2D broadcast communication resource pool, and/or a D2D unicast communication resource pool, and/or a D2D multicast communication resource pool.

The resource pool parameters indicated by the anchor carrier resource pool indication message include at least one of the following: an offset of a starting position of the anchor carrier resource pool, a bitmap, and a bitmap repetition count. In another embodiment, the resource pool parameters indicated by the anchor carrier resource pool indication message may include multiple offsets for the starting positions corresponding to multiple anchor carrier resource pools, and/or multiple bitmaps and/or multiple counts for the bitmap repetitions. Here, the offset of the starting position of the anchor carrier resource pool is with respect to a resource of the NB-PSBCH (or synchronization resource) or with respect to a resource used for transmitting the anchor carrier resource pool indication message, e.g. a sub-frame used for transmitting the NB-PSBCH or a sub-frame used for transmitting the anchor carrier resource pool indication message. The bits having bit value of 1 in the bitmap indicates the resource of the anchor carrier resource pool. For example, the sub-frame corresponding to the bit of value 1 is the sub-frame included in the resource pool of the anchor carrier. The bitmap repeats and all bits with a value of 1 indicate all the resources contained in the anchor carrier resource pool.

In this second embodiment, the offset of the starting position of the anchor carrier resource pool includes the offset relative to the resource or sub-frame used for transmitting the NB-PSBCH or the offset relative to the resource or sub-frame used for transmitting the anchor carrier resource pool indication message. The offset value may also be a fixed value or a pre-configured value. For example, the offset value may be fixed to be an offset of 2 sub-frames relative to the sub-frame for transmitting the NB-PSBCH or be fixed to an offset of 1 sub-frame relative to the sub-frame for transmitting the anchor carrier resource pool indication message.

In a third embodiment, the relay UE transmits an anchor carrier resource pool indication message on the radio resources of the anchor carrier to indicate information about a discovery resource pool and/or a D2D communication resource pool of the relay UE and/or the remote UE on the anchor carrier.

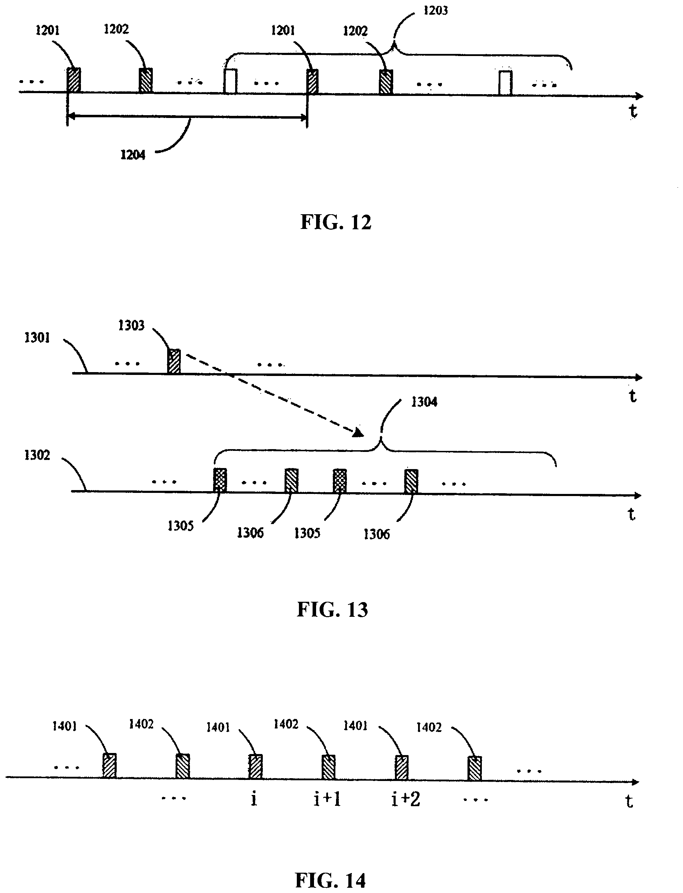

A manner of indicating an anchor carrier resource pool is to indicate a resource belonging to an anchor carrier resource pool within an anchor carrier resource pool period, and the resource pools on the anchor carrier are distributed according to the period, as shown in FIG. 12. FIG. 12 illustrates another exemplary method for indicating a first resource pool 1203 on a first carrier using a first indication message 1202, in accordance with an embodiment of the present disclosure. As shown in FIG. 12, 1204 is a resource period of the NB-PSBCH, which is also referred to as a synchronization resource period. The anchor carrier resource pool indication message is transmitted on the radio resource 1202. The indicated content corresponds to one anchor carrier resource pool period 1203. The anchor carrier resource pool has a period distribution from a starting position, and is not associated with the synchronization resource period 1204.

The content indicated by the anchor carrier resource pool indication message includes at least one of the following: the transmission resource pool information of the D2D discovery signal of the relay UE, the transmission resource pool information of the D2D discovery signal of the remote UE, the transmission resource pool information of the D2D communication of the remote UE, the transmission resource pool information of the D2D communication of the relay UE, the number of the remote UEs, remote UE identification information. The D2D communication resource pool includes a D2D broadcast communication resource pool, and/or a D2D unicast communication resource pool, and/or a D2D multicast communication resource pool.

The resource pool parameters indicated by the anchor carrier resource pool indication message include at least one of the following: an offset of a starting position of the anchor carrier resource pool, a bitmap, and a bitmap repetition count. In another embodiment, the resource pool parameters indicated by the anchor carrier resource pool indication message may include multiple offsets for the starting positions corresponding to multiple anchor carrier resource pools, and/or multiple bitmaps and/or multiple counts for the bitmap repetitions. Here, the offset of the starting position of the anchor carrier resource pool is relative to the position of the sub-frame having a system frame number 0 (SFN 0). The bits having bit value of 1 in the bitmap indicates the resource of the anchor carrier resource pool. For example, the sub-frame corresponding to the bit of value 1 is the sub-frame included in the resource pool of the anchor carrier. The bitmap repeats and all bits with a value of 1 indicate all the resources contained in the anchor carrier resource pool.

In a fourth embodiment, a method for indicating non-anchor carrier and non-anchor carrier resource pool is disclosed. The relay UE transmits a non-anchor carrier resource pool indication message on the anchor carrier to indicate information about non-anchor carrier and/or non-anchor carrier resource pool for the remote UE.

FIG. 13 illustrates an exemplary method for indicating a second resource pool 1304 on a second carrier using a second indication message, in accordance with an embodiment of the present disclosure. As shown in FIG. 13, the relay UE transmits, using a resource 1303 on the anchor carrier 1301, a non-anchor carrier resource pool indication message to indicate information of the non-anchor carrier 1302 and/or the non-anchor carrier resource pool 1304.

The non-anchor carrier resource pool indication message indicates information of a D2D discovery or communication resource pool on the non-anchor carrier 1302, and includes the following: an index of the non-anchor carrier, an offset of the non-anchor carrier index relative to the anchor carrier index, an index of PRBs corresponding to non-anchor carriers in the system bandwidth based on a granularity of PRB, or an offset value between a PRB index corresponding to a non-anchor carrier and a PRB index corresponding to an anchor carrier. For example, within a system bandwidth of 10 MHz, a PRB index corresponding to an anchor carrier is 20, and an offset indicated by the non-anchor carrier resource pool indication message is 3, which means an offset of a PRB index corresponding to a non-anchor carrier relative to a PRB index corresponding to an anchor carrier is 3. Then the PRB index corresponding to the non-anchor carrier allocated to the remote UE is 23.

The non-anchor carrier resource pool indication message indicates information of a D2D discovery or communication resource pool on the non-anchor carrier 1302, and includes the following: an offset of a starting position of the non-anchor carrier resource pool, a bitmap, and a bitmap repetition count. In another embodiment, the resource pool parameters indicated by the non-anchor carrier resource pool indication message may include multiple offsets for the starting positions corresponding to multiple non-anchor carrier resource pools, and/or multiple bitmaps and/or multiple counts for the bitmap repetitions. Here, the offset of the starting position of the non-anchor carrier resource pool is relative to the position of the sub-frame having a system frame number 0 (SFN 0).

The information content indicating the non-anchor carrier resource pool 1304 includes at least one of the following: a D2D communication resource pool of the relay UE and a D2D communication resource pool of the remote UE. Each D2D communication resource pool includes a D2D broadcast communication resource pool, and/or a D2D unicast communication resource pool, and/or a D2D multicast communication resource pool. For example, as shown in FIG. 13, the resource 1305 is a resource included in the D2D communication resource pool of the relay UE; the resource 1306 is a resource included in the D2D communication resource pool of the remote UE. Further, the above D2D communication resource pool includes a resource pool for transmitting control information and/or service data of the D2D communication.

In a fifth embodiment, a resource scheduling method is disclosed. The resource scheduling method is applicable to D2D unicast communication on a non-anchor carrier. Specifically, a D2D unicast communication resource pool on a non-anchor carrier includes a control information transmission resource pool and a data transmission resource pool. The resources in the control information transmission resource pool may be used to transmit control information, and may also be used to transmit service data; and the resources in the data transmission resource pool can only be used to transmit service data. When scheduling resources for service data, the resources in the data transmission resource pool are preferentially allocated, although the resources in the control information resource pool may also be allocated. The resources allocated to the service data transmission in the control information transmission resource pool can no longer be used to transmit the control information.

FIG. 14 illustrates an exemplary method for scheduling resources for a D2D unicast communication, in accordance with this embodiment. For example, on a non-anchor carrier, the sub-frames included in the transmission resource pool period of the relay UE are {t0, t1, ..., tN-1}, where N is a positive integer. In the resource pool period, a sub-frame *t₂ₙ* (0 ≤ *n* < *N*/*2*) is a resource in the control information transmission resource pool, and a sub-frame *t*_{*2n*+*1*} (0 ≤ *n* < (*N-1)*/*2*) is a resource in the service data transmission resource pool. As shown in FIG. 14, 1401 is a sub-frame in the control information transmission resource pool, and 1402 is a sub-frame in the service data transmission resource pool. When the control information of the relay UE is transmitted in sub-frame i, the corresponding service data is transmitted in sub-frame i + 1; if the transport block (TB) of the service data needs to occupy resources in two sub-frames, sub-frame i + 1 and sub-frame i + 2 are both used for transmitting service data, where i is an integer number in [0, N-2]. In this case, the sub-frames indicating data transmission in the control information are sub-frame i + 1 and sub-frame i + 2, where the sub-frame i + 2 is a sub-frame in the control information transmission resource pool, but is used for transmitting the service data instead of transmitting the control information.

A resource scheduling method is used for scheduling a remote UE on a non-anchor carrier. When a remote UE has a service data transmission request, a scheduling request is transmitted in a dedicated resource pool for remote UE scheduling request on a non-anchor carrier. The scheduling request may be transmitted in the control information or service data of the D2D communication. The scheduling request includes information of service data packet size, and/or remote UE identification information. After receiving the scheduling request from the remote UE, the relay UE allocates resources for the remote UE and transmits the resource allocation information in the transmission resource pool of the D2D communication of the relay UE on the non-anchor carrier, to indicate the allocated resources for the remote UE. The resource allocation information may be transmitted in the control information or service data of the D2D communication. The transmission resource pool of the D2D communication of the relay UE may include a D2D broadcast transmission resource pool, and/or a D2D unicast transmission resource pool, and/or a D2D multicast transmission resource pool.

In a sixth embodiment, a carrier list is configured or preconfigured for the relay UE and/or the remote UE, including carrier position in the frequency domain (e.g. RB index, offset relative to anchor carrier) and time domain indication of the resource pool corresponding to the carrier (e.g. starting position, bitmap, bitmap mapping rules). The relay UE and/or the remote UE acquires resource pool configuration information on the carrier, e.g. from the BS. The relay UE and/or the remote UE selects one of the carriers according to the service type or priority, the delay requirement, the measured load of the carrier, etc. or randomly selects one of the carriers as its own working carrier. On the selected working carrier, the relay UE and/or the remote UE sends a discovery or communication signal in a corresponding resource pool. The relay UE and/or the remote UE receives the discovery or communication signal in the corresponding resource pool on the selected working carrier.

According to a first scenario of the sixth embodiment, a sidelink communication is performed in the cellular band. When the sidelink communication is within the system bandwidth of cellular communication, the base station can configure a carrier list of sidelink communication, configure it based on PRB index in the bandwidth, and determine on which PRB the sidelink communication can be performed. In this case, the remote UE has been synchronized to the base station to obtain the PRB index in the cellular bandwidth, such that there is no need to configure the anchor carrier and the PRB index may be directly configured.

The configuration information further includes information of a resource pool on a sidelink communication carrier or a PRB, and specifically includes discovery resource pool information and/or communication resource pool information. For example, the configuration information may include one or more of the following resource pools: a discovery signal transmission resource pool of a relay UE, a discovery signal transmission resource pool of a remote UE, a communication signal transmission resource pool of a relay UE, a communication signal transmission resource pool of a remote UE, a discovery signal reception resource pool of a relay UE, a discovery signal reception resource pool of a remote UE, a communication signal reception resource pool of a relay UE, and a communication signal reception resource pool of a remote UE. Some of these resource pools may overlap. For example, the discovery signal transmission resource pool of the relay UE and the discovery signal reception resource pool of the remote UE may overlap. The configuration parameters of the resource pool include the period of the resource pool, and/or the bitmap indicating the sub-frames included in the resource pool, and/or the number of times the bitmap is repeated.

The remote UE determines a carrier or a PRB as a working carrier or a working PRB in the configured carrier list or PRB list. The determination may be based on the following: a random selection by the remote UE and a calculation by the remote UE, e.g. taking modulo operation on the number of carriers in the carrier list according to the UE identification. The working carrier or working PRB herein refers to the carrier or PRB where the remote UE performs service data transmission. Through the D2D discovery process on the working carrier or working PRB, the remote UE establishes a sidelink connection with the relay UE. During D2D discovery, the relay UE selects a resource from a discovery resource pool of the relay UE, such as a discovery signal transmission resource pool of the relay UE, to transmit a D2D discovery signal. The remote UE selects a resource from a discovery resource pool of the remote UE, such as a discovery signal transmission resource pool of the remote UE, to transmit a D2D discovery signal.

The remote UE autonomously selects a resource from a communication resource pool on the determined working carrier or working PRB to transmit a D2D communication signal, or transmits a D2D communication signal according to the resource allocated by the relay UE. For example, the remote UE randomly selects a resource from a communication signal transmission resource pool of the remote UE to transmit a D2D communication signal, or the relay UE allocates a resource from a communication signal transmission resource pool of the remote UE for the remote UE to transmit a D2D communication signal.

According to a second scenario of the sixth embodiment, a sidelink communication is performed in a dedicated frequency band. When a sidelink communication is in the dedicated frequency band, the base station configures bandwidth and the center frequency of the sidelink communication of the relay UE. Alternatively, the relay UE obtains the bandwidth and the center frequency of the sidelink communication through the configuration parameters. The base station configures a carrier list that can be used by the remote UE for sidelink communications and configures it by the PRB index in the bandwidth. The remote UE determines on which PRBs the sidelink communications can be performed according to the configured carrier list.

The configuration information further includes information of a resource pool on a sidelink communication carrier or a PRB, and specifically includes at least one of the following: discovery resource pool information of the relay UE and/or the remote UE, and communication resource pool information of the relay UE and/or the remote UE. For example, the configuration information may include one or more of the following resource pools: a discovery signal transmission resource pool of a relay UE, a discovery signal transmission resource pool of a remote UE, a communication signal transmission resource pool of a relay UE, a communication signal transmission resource pool of a remote UE, a discovery signal reception resource pool of a relay UE, a discovery signal reception resource pool of a remote UE, a communication signal reception resource pool of a relay UE, and a communication signal reception resource pool of a remote UE. Some of these resource pools may overlap. For example, the discovery signal transmission resource pool of the relay UE and the discovery signal reception resource pool of the remote UE may overlap. The configuration parameters of the resource pool include the period of the resource pool, and/or the bitmap indicating the sub-frames included in the resource pool, and/or the number of times the bitmap is repeated, and/or the time range of the sub-frames included in the resource pool.

The remote UE determines a carrier or a PRB as a working carrier or a working PRB in the configured carrier list or PRB list. The determination may be based on the following: a random selection by the remote UE and a calculation by the remote UE, e.g. taking modulo operation on the number of carriers in the carrier list according to the UE identification. The working carrier or working PRB herein refers to the carrier or PRB where the remote UE performs service data transmission. Through the D2D discovery process on the working carrier or working PRB, the remote UE establishes a sidelink connection with the relay UE. During D2D discovery, the relay UE selects a resource from a discovery resource pool of the relay UE, such as a discovery signal transmission resource pool of the relay UE, to transmit a D2D discovery signal. The remote UE selects a resource from a discovery resource pool of the remote UE, such as a discovery signal transmission resource pool of the remote UE, to transmit a D2D discovery signal.

The remote UE autonomously selects a resource from a communication resource pool on the determined working carrier or working PRB to transmit a D2D communication signal, or transmits a D2D communication signal according to the resource allocated by the relay UE. For example, the remote UE randomly selects a resource from a communication signal transmission resource pool of the remote UE to transmit a D2D communication signal, or the relay UE allocates a resource from a communication signal transmission resource pool of the remote UE for the remote UE to transmit a D2D communication signal.

In a seventh embodiment, only the discovery resource pool is configured or the communication resource pool of a part of (a small number of) carriers is configured, compared to the sixth embodiment. The relay UE reconfigures the working carrier of the remote UE and the corresponding resource pool information, based on the discovery or communication on a certain carrier between the relay UE and the remote UE.

One or a group of carriers or PRBs are configured or pre-configured. In addition, the system can configure or pre-configure D2D discovery resource pools and/or D2D communication resource pools of relay UEs and/or remote UEs on the corresponding carriers or PRBs. The D2D discovery resource pool includes a discovery signal transmission resource pool and/or a discovery signal reception resource pool; and the D2D communication resource pool includes a communication signal transmission resource pool and/or a communication signal reception resource pool. The discovery signal transmission resource pool of the relay UE may overlap the discovery signal reception resource pool of the remote UE; the discovery signal transmission resource pool of the remote UE may overlap the discovery signal reception resource pool of the relay UE. The discovery signal transmission resource pool of the relay UE and the discovery signal reception resource pool of the relay UE may or may not overlap; and the discovery signal transmission resource pool of the remote UE and the discovery signal reception resource pool of the remote UE may or may not overlap. The communication signal transmission resource pool of the relay UE overlaps the communication signal reception resource pool of the remote UE; the communication signal transmission resource pool of the remote UE overlaps the communication signal reception resource pool of the relay UE. The communication signal transmission resource pool of the relay UE and the communication signal reception resource pool of the relay UE may or may not overlap; and the communication signal transmission resource pool of the remote UE and the communication signal reception resource pool of the remote UE may or may not overlap. The configuration or pre-configuration parameters of the resource pool include the period of the resource pool, and/or the bitmap indicating the sub-frames included in the resource pool, and/or the number of repetitions of the bitmap, and/or the time range of the resource pool including the sub-frame.

The relay UE and the remote UE establish a sidelink connection through the D2D discovery process on the configured or preconfigured carrier or PRB. In the D2D discovery process, the relay UE transmits a D2D discovery signal from a discovery signal transmission resource pool of the relay UE, and the remote UE selects a resource from the discovery signal transmission resource pool of the remote UE to transmit a D2D discovery signal. When the relay UE establishes a sidelink connection with the remote UE, the relay UE may allocate a working carrier or a working PRB for the remote UE and resource pool information on the allocated working carrier or working PRB, through the indication information. The working carrier or working PRB herein refers to the carrier or PRB where the remote UE performs service data transmission. The indication information may be transmitted through the control information of the D2D communication, such as PSCCH; and may also be transmitted through data of the D2D communication, such as PSSCH; and may also be transmitted over a newly defined physical channel bearer.

For example, by configuring or pre-configuring a carrier as an anchor carrier, the configuration or pre-configuration information further includes resource pool information on the anchor carrier, and the relay UE and/or the remote UE may determine the resource pools on the anchor carrier through configuration or pre-configuration information. For example, the resource pools on the anchor carrier may include: a resource pool where the relay UE transmits the D2D discovery signal, a resource pool where the relay UE receives the D2D discovery signal, a resource pool where the relay UE transmits the D2D communication signal, a resource pool where the relay UE receives the D2D communication signal, a resource pool for transmitting a D2D discovery signal by the remote UE, a resource pool for receiving a D2D discovery signal by the remote UE, a resource pool for transmitting a D2D communication signal by the remote UE, and a resource pool for receiving a D2D communication signal by the remote UE. After the relay UE discovers the remote UE or the remote UE discovers the relay UE, the relay UE and the remote UE establishes the sidelink connection. After establishing the sidelink connection, the relay UE selects a resource from the communication signal transmission resource pool of the relay UE to transmit a communication signal to indicate a working carrier or a working PRB of the remote UE. For example, the relay UE transmits control information (carried by the PSCCH) and data (carried by the PSSCH) of the D2D communication. The data includes indication information indicating a working carrier or a working PRB of the remote UE and/or the resource pool information on the working carrier or working PRB. The resource pool information includes resource pool information of the remote UE and/or the relay UE on the working carrier or working PRB.

In an eighth embodiment, the relay UE detects the working carrier (RB) of the bandwidth limited UE and measures its channel busy ratio (CBR). Depending on the CBR conditions, the relay UE may indicate some remote UEs about other working carriers and/or the resource pool configuration information of the other working carriers, and instruct them to switch carriers. After the remote UE receives the carrier switching indication, the remote UE switches to work on other carriers.

When the relay UE establishes a sidelink connection with the remote UE, the relay UE may reassign a working carrier or a working PRB for the remote UE. Here, the working carrier or the working PRB refers to the carrier or PRB where the remote UE performs service data transmission. The relay UE measures a channel busy ratio (CBR) on a working PRB or a PRB corresponding to a working carrier of the remote UE, and determines whether to reassign a working carrier or a working PRB for the remote UE according to the value of the CBR. For example, comparing the CBR value measured on the working PRB or the PRB corresponding to a working carrier to a first decision threshold, if it is greater than the first decision threshold, the working carrier or working PRB reassignment process is triggered to reassign a working carrier or a working PRB to the remote UE on the corresponding working carrier or working PRB. For example, a part or all of the remote UEs are selected and re-allocated to other working carriers or working PRBs. The selection method includes random selection or selection according to the size of the service data of the remote UE, such as selecting one or more remote UEs with the largest amount of service data or one or more remote UEs with the smallest amount of service data. If the CBR value is not greater than the first decision threshold, no working carrier or working PRB is re-assigned.

The relay UE measures a channel busy ratio (CBR) on a working PRB or a PRB corresponding to a working carrier of the remote UE, and determines whether the corresponding working carrier or working PRB can be used for allocating or reallocating the working carrier or working PRB of remote UEs according to the value of the CBR. For example, comparing the CBR value measured on the working PRB or the PRB corresponding to a working carrier to a second decision threshold, if it is less than the second decision threshold, it is determined that the corresponding working carrier or working PRB can be used for the working carrier or working PRB assignment or re-assignment of the remote UEs; and if it is not less than the second decision threshold, it is determined that the corresponding working carrier or working PRB cannot be used for assignment or re-assignment of the working carrier or working PRB of the remote UEs.

In one example, the pre-configuration information includes a list of D2D carriers of a bandwidth-limited remote UE and discovery resource pools and/or communication resource pools on each carrier. A remote UE1 obtains the D2D carrier list and the resource pool information on each carrier according to the pre-configured parameters. The remote UE1 randomly selects one carrier from the carrier list as a working carrier, and establishes a sidelink connection with a relay UE1 on the carrier through the D2D discovery. Based on the communication resource pool preconfigured on the corresponding working carrier, the remote UE1 performs D2D communication with the relay UE1 to transmit the service data. The relay UE1 measures the CBR on the PRB corresponding to the working carrier of the remote UE1 and determines whether the measured CBR value is greater than the first decision threshold as described above. If yes, the relay UE1 initiates the process of reassigning the working carrier. Assuming that the remote UE1 is selected as a UE for reassigning the working carrier, the relay UE1 will reassign the working carrier for the remote UE1. The working carrier newly assigned to the remote UE1 needs to meet the following conditions: the measured CBR value on the PRB corresponding to the carrier is smaller than the second decision threshold.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques.

To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, module, etc. can be configured to perform one or more of the functions described herein. The term "configured to" or "configured for" as used herein with respect to a specified operation or function refers to a processor, device, component, circuit, structure, machine, module, etc. that is physically constructed, programmed and/or arranged to perform the specified operation or function.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method performed by a first wireless communication device, the method comprising:
broadcasting a first message on a first carrier, wherein the first message comprises information about a first resource pool set on the first carrier, wherein the first resource pool set comprises at least one first resource pool;
transmitting a second message in the at least one first resource pool on the first carrier, wherein the second message comprises information about a second carrier and a second resource pool set on the second carrier, wherein the second resource pool set comprises at least one second resource pool; and
communicating with at least one second wireless communication device in the at least one second resource pool on the second carrier.

2. The method of claim 1,
wherein the first carrier is an anchor carrier and the second carrier is a non-anchor carrier, or
wherein the first wireless communication device is within a coverage area of a base station, the at least one second wireless communication device is outside or within the coverage area of the base station, and the at least one second wireless communication device has a limited bandwidth.

3. The method of claim 1,
wherein the first message is broadcasted using a transmission resource that is determined based on at least one of: a radio signal transmitted by the first wireless communication device on the first carrier; a configuration; a pre-configuration; and a pre-definition, wherein the pre-definition preferably comprises at least one of the following: the transmission resource used for the first message is fixed; and the starting offset of the transmission resource used for the first message relative to the resource used for transmitting the radio signal is fixed,
or
wherein the first message is broadcasted using a transmission resource in a transmission resource pool that is determined based on at least one of: a radio signal transmitted by the first wireless communication device on the first carrier; a configuration; and a pre-configuration.

4. The method of claim 3,
wherein the radio signal comprises at least one of the following: a sidelink radio signal used for synchronization between the first wireless communication device and the at least one second wireless communication device; and a physical sidelink broadcast channel (PSBCH) that carries indication information for the at least one second wireless communication device,
or
wherein the radio signal carries information about at least one of the following: a starting offset of the transmission resource and/or the transmission resource pool relative to the resource used for transmitting the radio signal; a length of the transmission resource and/or the transmission resource pool in time domain; a quantity of sub-frames included in the transmission resource and/or the transmission resource pool; a bitmap corresponding to the sub-frames included in the transmission resource and/or the transmission resource pool; and a quantity of bitmap repetitions.

5. The method of claim 1, wherein the information about the first resource pool set comprises information about at least one of the following:
a device-to-device, D2D, discovery resource pool of the first wireless communication device on the first carrier;
a D2D discovery resource pool of the at least one second wireless communication device on the first carrier;
a D2D communication resource pool of the first wireless communication device on the first carrier; and
a D2D communication resource pool of the at least one second wireless communication device on the first carrier,
wherein preferably:
the D2D discovery resource pool of the first wireless communication device or of the at least one second wireless communication device comprises at least one of the following:
the D2D discovery transmission pool;
the D2D discovery reception pool;
the D2D communication resource pool of the first wireless communication device or of the at least one second wireless communication device comprises at least one of the following:
the D2D communication transmission pool;
the D2D communication reception pool;
the D2D communication control resource pool; and
the D2D communication data resource pool.

6. The method of claim 1,
wherein the first message is valid within a resource period for transmitting the radio signal and comprises information about at least one of the following: one or more starting offsets of one or more first resource pools relative to the resource used for transmitting the radio signal; one or more lengths of one or more first resource pools in time domain; one or more bitmaps corresponding to sub-frames included in one or more first resource pools; and one or more numbers of bitmap repetitions, or
wherein the first message is valid within a first carrier resource pool period and comprises information about at least one of the following: the first carrier resource pool period; one or more starting offsets of one or more first resource pools within the first carrier resource pool period; one or more starting offsets of one or more first resource pools relative to System Frame Number 0, SFN 0; one or more length of one or more first resource pools in time domain; one or more bitmaps corresponding to sub-frames included in one or more first resource pools; and one or more numbers of bitmap repetitions, or
wherein the information about the second carrier comprises information about at least one of the following: an index of the second carrier; an index of a physical resource block, PRB, corresponding to the second carrier; and an offset value of a first PRB index corresponding to the second carrier relative to a second PRB index corresponding to the first carrier.

7. The method of claim 1, wherein the information about the second resource pool set comprises information about at least one of the following: a device-to-device, D2D, discovery resource pool of the first wireless communication device; a D2D discovery resource pool of the at least one second wireless communication device; a D2D communication resource pool of the first wireless communication device; a D2D communication resource pool of the at least one second wireless communication device; and a dedicated resource pool for scheduling request transmission of the at least one second wireless communication device on the second carrier, and
wherein: the D2D discovery resource pool of the first wireless communication device or of the at least one second wireless communication device comprises at least one of the following: the D2D discovery transmission pool; and the D2D discovery reception pool, the D2D communication resource pool of the first wireless communication device or of the at least one second wireless communication device comprises at least one of the following: the D2D communication transmission pool; the D2D communication reception pool; the D2D communication control resource pool; and the D2D communication data resource pool.

8. The method of claim 1, wherein the second message comprises information about at least one of the following: a second carrier resource pool period; one or more starting offsets of one or more second resource pools within the second carrier resource pool period; one or more starting offsets of one or more second resource pools relative to System Frame Number 0, SFN 0; one or more lengths of one or more second resource pools in time domain; one or more bitmaps corresponding to sub-frames included in one or more second resource pools; and one or more numbers of bitmap repetitions, or
wherein at least one of the first resource pool set and the second resource pool set is configured and/or pre-configured.

9. The method of claim 1, further comprising:
transmitting a scheduling message on the second carrier to the at least one second wireless communication device, wherein the scheduling message indicates information about a scheduling resource for the at least one second wireless communication device; and receiving device-to-device communication control and/or service data from the at least one second wireless communication device using the scheduling resource, or
receiving a scheduling request from the at least one second wireless communication device using at least one resource in a dedicated resource pool on the second carrier; allocating a scheduling resource to the at least one second wireless communication device in response to the scheduling request; transmitting information about the scheduling resource to the at least one second wireless communication device on the second carrier; and receiving device-to-device communication control and/or service data from the at least one second wireless communication device using the scheduling resource.

10. The method of claim 1, further comprising: selecting, from a configured or preconfigured carrier list, a carrier as a working carrier for the at least one second wireless communication device; measuring a channel busy ratio, CBR, value corresponding to the working carrier; comparing the CBR value with a first threshold; and re-assigning a new working carrier to the at least one second wireless communication device in response to the CBR value is greater than the first threshold, wherein a CBR value measured corresponding to the new working carrier is less than a second threshold, or
further comprising: selecting, from a configured or preconfigured physical resource block, PRB, list, a PRB as a working PRB for the at least one second wireless communication device; measuring a channel busy ratio, CBR, value on the working PRB; comparing the CBR value with a first threshold; and re-assigning a new working PRB to the at least one second wireless communication device in response to the CBR value is greater than the first threshold, wherein a CBR value measured on the new working PRB is less than a second threshold.

11. A method performed by a first wireless communication device, the method comprising:
receiving a first message on a first carrier from a second wireless communication device, wherein the first message comprises information about a first resource pool set on the first carrier, wherein the first resource pool set comprises at least one first resource pool;
receiving a second message in the at least one first resource pool on the first carrier from the second wireless communication device, wherein the second message indicates information about a second carrier and a second resource pool set on the second carrier, wherein the second resource pool set comprises at least one second resource pool; and
communicating with the second wireless communication device in at least one second resource pool on the second carrier.

12. The method of claim 11,
wherein the first carrier is an anchor carrier and the second carrier is a non-anchor carrier; or
wherein the first wireless communication device is within or outside a coverage area of a base station; the first wireless communication device has a limited bandwidth; and the second wireless communication device is within the coverage area of the base station.

13. The method of claim 11, wherein the first message is broadcasted by the second wireless communication device using a transmission resource that is determined based on at least one of a radio signal transmitted by the second wireless communication device on the first carrier; a configuration; a pre-configuration; and a pre-definition, wherein the pre-definition comprises at least one of the following: the transmission resource used for the first message is fixed; and the starting offset of the transmission resource used for the first message relative to the resource used for transmitting the radio signal is fixed, or
wherein the first message is broadcasted by the second wireless communication device using a transmission resource in a transmission resource pool that is determined based on at least one of: a radio signal transmitted by the second wireless communication device on the first carrier; a configuration; and a pre-configuration.

14. The method of claim 13, wherein the radio signal comprises at least one of the following:
a sidelink radio signal used for synchronization between the first wireless communication device and the second wireless communication device; and a physical sidelink broadcast channel, PSBCH, that carries indication information for the first wireless communication device, or
wherein the radio signal carries information about at least one of the following: a starting offset of the transmission resource and/or the transmission resource pool relative to the resource used for transmitting the radio signal; a length of the transmission resource and/or the transmission resource pool in time domain; a quantity of sub-frames included in the transmission resource and/or the transmission resource pool; a bitmap corresponding to the sub-frames included in the transmission resource and/or the transmission resource pool; and a quantity of bitmap repetitions.

15. The method of claim 11, wherein the information about the first resource pool set comprises information about at least one of the following: a device-to-device, D2D, discovery resource pool of the first wireless communication device on the first carrier; a D2D discovery resource pool of the second wireless communication device on the first carrier; a D2D communication resource pool of the first wireless communication device on the first carrier; and a D2D communication resource pool of the second wireless communication device on the first carrier, and
wherein: the D2D discovery resource pool of the first wireless communication device or of the second wireless communication device comprises at least one of the following: the D2D discovery transmission pool; the D2D discovery reception pool, the D2D communication resource pool of the first wireless communication device or of the second wireless communication device comprises at least one of the following: the D2D communication transmission pool; the D2D communication reception pool; the D2D communication control resource pool; and the D2D communication data resource pool.

16. The method of claim 11, wherein the first message is valid within a resource period for transmitting the radio signal and comprises information about at least one of the following: one or more starting offsets of one or more first resource pools relative to the resource used for transmitting the radio signal; one or more lengths of one or more first resource pools in time domain; one or more bitmaps corresponding to sub-frames included in one or more first resource pools; and one or more numbers of bitmap repetitions, or
wherein the first message is valid within a first carrier resource pool period and comprises information about at least one of the following: the first carrier resource pool period; one or more starting offsets of one or more first resource pools within the first carrier resource pool period; one or more starting offsets of one or more first resource pools relative to System Frame Number 0, SFN 0; one or more lengths of one or more first resource pools in time domain; one or more bitmaps corresponding to sub-frames included in one or more first resource pools; and one or more numbers of bitmap repetitions.

17. The method of claim 11, further comprising: receiving a scheduling message on the second carrier from the second wireless communication device, wherein the scheduling message indicates information about a scheduling resource for the first wireless communication device; and transmitting device-to-device communication control and/or service data to the second wireless communication device based on the scheduling resource, or
further comprising: transmitting a scheduling request to the second wireless communication device based on a dedicated resource pool on the second carrier; receiving, from the second wireless communication device on the second carrier, information about a scheduling resource allocated by the second wireless communication device in response to the scheduling request; and transmitting device-to-device communication control and/or service data to the second wireless communication device based on the scheduling resource, or
wherein at least one of the first resource pool set and the second resource pool set is configured and/or pre-configured.

18. A wireless communication device configured to carry out the method of any one of claims 1 through 17.

19. A non-transitory computer-readable medium having stored thereon computer-executable instructions for carrying out the method of any one of claims 1 through 17.

## Patentansprüche

1. Verfahren, das durch ein erstes drahtloses Kommunikationsgerät durchgeführt wird, wobei das Verfahren aufweist:
Übertragen einer ersten Nachricht auf einem ersten Träger, wobei die erste Nachricht Informationen über einen ersten Ressourcenpoolsatz auf dem ersten Träger aufweist, wobei der erste Ressourcenpoolsatz mindestens einen ersten Ressourcenpool aufweist;
Senden einer zweiten Nachricht in dem mindestens einen ersten Ressourcenpoolsatz auf dem ersten Träger, wobei die zweite Nachricht Informationen über einen zweiten Träger und einen zweiten Ressourcenpoolsatz auf dem zweiten Träger aufweist, wobei der zweite Ressourcenpoolsatz mindestens einen zweiten Ressourcenpool aufweist; und
Kommunizieren mit mindestens einem zweiten drahtlosen Kommunikationsgerät in dem mindestens einen zweiten Ressourcenpool auf dem zweiten Träger.

2. Verfahren nach Anspruch 1,
wobei der erste Träger ein Anchor Carrier ist und der zweite Träger ein Non-Anchor Carrier ist oder
wobei das erste drahtlose Kommunikationsgerät innerhalb eines Versorgungsbereichs einer Basisstation liegt, das mindestens eine zweite drahtlose Kommunikationsgerät außerhalb oder innerhalb des Versorgungsbereichs der Basisstation liegt und das mindestens eine zweite drahtlose Kommunikationsgerät eine begrenzte Bandbreite hat.

3. Verfahren nach Anspruch 1,
wobei die erste Nachricht mit Hilfe einer Senderessource übertragen wird, die auf der Grundlage eines Funksignals, das durch das erste drahtlose Kommunikationsgerät auf dem ersten Träger gesendet wird; einer Konfiguration; einer Vorkonfiguration; und/oder eine Vordefinition bestimmt wird, wobei die Vordefinition vorzugsweise Folgendes aufweist: die für die erste Nachricht verwendete Senderessource ist fest; und/oder der Anfangsoffset der für die erste Nachricht verwendeten Senderessource relativ zu der zum Senden des Funksignals verwendeten Ressource ist fest,
oder
wobei die erste Nachricht mit Hilfe einer Senderessource in einem Senderessourcenpool übertragen wird, der auf der Grundlage eines Funksignals, das durch das erste drahtlose Kommunikationsgerät auf dem ersten Träger gesendet wird; und/oder einer Konfiguration; und/oder einer Vorkonfiguration bestimmt wird.

4. Verfahren nach Anspruch 3,
wobei das Funksignal Folgendes aufweist: ein Sidelink-Funksignal, das zur Synchronisation zwischen dem ersten drahtlosen Kommunikationsgerät und dem mindestens einen zweiten drahtlosen Kommunikationsgerät verwendet wird; und/oder einen physikalischen Sidelink-Broadcastkanal (PSBCH), der Anzeigeinformationen für das mindestens eine zweite drahtlose Kommunikationsgerät mitführt,
oder
wobei das Funksignal Informationen über Folgendes mitführt: einen Anfangsoffset der Senderessource und/oder des Senderessourcenpools relativ zu der zum Senden des Funksignals verwendeten Ressource; und/oder eine Länge der Senderessource und/oder des Senderessourcenpools im Zeitbereich; und/oder eine Menge von Sub-Frames, die zur Senderessource und/oder zum Senderessourcenpool gehören; und/oder eine Bitmap, die den zur Senderessource und/oder zum Senderessourcenpool gehörenden Sub-Frames entspricht; und/oder eine Menge von Bitmap-Wiederholungen.

5. Verfahren nach Anspruch 1, wobei die Informationen über den ersten Ressourcenpoolsatz Informationen über Folgendes aufweisen:
einen Gerät-zu-Gerät- (Device-to-Device-), D2D-, Discovery-Ressourcenpool des ersten drahtlosen Kommunikationsgeräts auf dem ersten Träger; und/oder einen D2D-Discovery-Ressourcenpool des mindestens einen zweiten drahtlosen Kommunikationsgeräts auf dem ersten Träger; und/oder einen D2D-Kommunikationsressourcenpool des ersten drahtlosen Kommunikationsgeräts auf dem ersten Träger; und/oder einen D2D-Kommunikationsressourcenpool des mindestens einen zweiten drahtlosen Kommunikationsgeräts auf dem ersten Träger,
wobei vorzugsweise:
der D2D-Discovery-Ressourcenpool des ersten drahtlosen Kommunikationsgeräts oder des mindestens einen zweiten drahtlosen Kommunikationsgeräts Folgendes aufweist:
den D2D-Discovery-Sendepool; und/oder
den D2D-Discovery-Empfangspool,
der D2D-Kommunikationsressourcenpool des ersten drahtlosen Kommunikationsgeräts oder des mindestens einen zweiten drahtlosen Kommunikationsgeräts Folgendes aufweist:
den D2D-Kommunikationssendepool; und/oder
den D2D-Kommunikationsempfangspool; und/oder
den D2D-Kommunikationssteuerressourcenpool; und/oder
den D2D-Kommunikationsdatenressourcenpool.

6. Verfahren nach Anspruch 1,
wobei die erste Nachricht innerhalb einer Ressourcenperiode zum Senden des Funksignals gültig ist und Informationen über Folgendes aufweist: einen oder mehrere Anfangsoffsets eines oder mehrerer erster Ressourcenpools relativ zu der zum Senden des Funksignals verwendeten Ressource; und/oder eine oder mehrere Längen eines oder mehrerer erster Ressourcenpools im Zeitbereich; und/oder eine oder mehrere Bitmaps, die Sub-Frames entsprechen, die zu einem oder mehreren ersten Ressourcenpools gehören; und/oder eine oder mehrere Anzahlen von Bitmap-Wiederholungen, oder
wobei die erste Nachricht innerhalb einer ersten Trägerressourcenpoolperiode gültig ist und Informationen über Folgendes aufweist: die erste Trägerressourcenpoolperiode; und/oder einen oder mehrere Anfangsoffsets eines oder mehrerer erster Ressourcenpools innerhalb der ersten Trägerressourcenpoolperiode; und/oder einen oder mehrere Anfangsoffsets eines oder mehrerer erster Ressourcenpools relativ zur System-Frame-Nummer 0, SFN 0; und/oder eine oder mehrere Längen eines oder mehrerer erster Ressourcenpools im Zeitbereich; und/oder eine oder mehrere Bitmaps, die Sub-Frames entsprechen, die zu einem oder mehreren ersten Ressourcenpools gehören; und/oder eine oder mehrere Anzahlen von Bitmap-Wiederholungen, oder
wobei die Informationen über den zweiten Träger Informationen über Folgendes aufweisen: einen Index des zweiten Trägers; und/oder einen Index eines physikalischen Ressourcenblocks, PRB, der dem zweiten Träger entspricht; und/oder einen Offsetwert eines ersten PRB-Index, der dem zweiten Träger entspricht, relativ zu einem zweiten PRB-Index, der dem ersten Träger entspricht.

7. Verfahren nach Anspruch 1, wobei die Informationen über den zweiten Ressourcenpoolsatz Informationen über Folgendes aufweisen: einen Gerät-zu-Gerät-, D2D-, Discovery-Ressourcenpool des ersten drahtlosen Kommunikationsgeräts; und/oder einen D2D-Discovery-Ressourcenpool des mindestens einen zweiten drahtlosen Kommunikationsgeräts; und/oder einen D2D-Kommunikationsressourcenpool des ersten drahtlosen Kommunikationsgeräts; und/oder einen D2D-Kommunikationsressourcenpool des mindestens einen zweiten drahtlosen Kommunikationsgeräts; und/oder einen dedizierten Ressourcenpool zum Scheduling-Anfragesenden des mindestens einen zweiten drahtlosen Kommunikationsgeräts auf dem zweiten Träger,
und
wobei der D2D-Discovery-Ressourcenpool des ersten drahtlosen Kommunikationsgeräts oder des mindestens einen zweiten drahtlosen Kommunikationsgeräts Folgendes aufweist:
den D2D-Discovery-Sendepool; und/oder den D2D-Discovery-Empfangspool, wobei der D2D-Kommunikationsressourcenpool des ersten drahtlosen Kommunikationsgeräts oder des mindestens einen zweiten drahtlosen Kommunikationsgeräts Folgendes aufweist: den D2D-Kommunikationssendepool;
und/oder den D2D-Kommunikationsempfangspool; und/oder den D2D-Kommunikationssteuerressourcenpool; und/oder den D2D-Kommunikationsdatenressourcenpool.

8. Verfahren nach Anspruch 1, wobei die zweite Nachricht Informationen über Folgendes aufweist: eine zweite Trägerressourcenpoolperiode; und/oder einen oder mehrere Anfangsoffsets eines oder mehrerer zweiter Ressourcenpools innerhalb der zweiten Trägerressourcenpoolperiode; und/oder einen oder mehrere Anfangsoffsets eines oder mehrerer zweiter Ressourcenpools relativ zur System-Frame-Nummer 0, SFN 0; und/oder eine oder mehrere Längen eines oder mehrerer zweiter Ressourcenpools im Zeitbereich; und/oder eine oder mehrere Bitmaps, die Sub-Frames entsprechen, die zu einem oder mehreren zweiten Ressourcenpools gehören; und/oder eine oder mehrere Anzahlen von Bitmap-Wiederholungen, oder wobei der erste Ressourcenpoolsatz und/oder der zweite Ressourcenpoolsatz konfiguriert und/oder vorkonfiguriert sind.

9. Verfahren nach Anspruch 1, das ferner aufweist:
Senden einer Scheduling-Nachricht auf dem zweiten Träger zu dem mindestens einen zweiten drahtlosen Kommunikationsgerät, wobei die Scheduling-Nachricht Informationen über eine Scheduling-Ressource für das mindestens eine zweite drahtlose Kommunikationsgerät aufweist; und Empfangen von Gerät-zu-Gerät-Kommunikationssteuer- und/oder Dienstdaten von dem mindestens einen zweiten drahtlosen Kommunikationsgerät mit Hilfe der Scheduling-Ressource, oder
Empfangen einer Scheduling-Anfrage von dem mindestens einen zweiten drahtlosen Kommunikationsgerät mit Hilfe mindestens einer Ressource in einem dedizierten Ressourcenpool auf dem zweiten Träger; Zuweisen einer Scheduling-Ressource zu dem mindestens einen zweiten drahtlosen Kommunikationsgerät als Reaktion auf die Scheduling-Anfrage; Senden von Informationen über die Scheduling-Ressource zu dem mindestens einen zweiten drahtlosen Kommunikationsgerät auf dem zweiten Träger; und Empfangen von Gerät-zu-Gerät-Kommunikationssteuer- und/ oder Dienstdaten von dem mindestens einen zweiten drahtlosen Kommunikationsgerät mit Hilfe der Scheduling-Ressource.

10. Verfahren nach Anspruch 1, das ferner aufweist: aus einer konfigurierten oder vorkonfigurierten Trägerliste erfolgendes Auswählen eines Trägers als Arbeitsträger für das mindestens eine zweite drahtlose Kommunikationsgerät; Messen eines Channel-Busy-Ratio-, CBR-, Werts, der dem Arbeitsträger entspricht, Vergleichen des CBR-Werts mit einem ersten Schwellwert; und Neuzuweisen eines neuen Arbeitsträgers zu dem mindestens einen zweiten drahtlosen Kommunikationsgerät als Reaktion darauf, dass der CBR-Wert größer als der erste Schwellwert ist, wobei ein CBR-Wert, der entsprechend dem neuen Arbeitsträger gemessen wird, kleiner als ein zweiter Schwellwert ist, oder
das ferner aufweist: aus einer konfigurierten oder vorkonfigurierten physikalischen Ressourcenblock-, PRB-, Liste erfolgendes Auswählen eines PRB als Arbeits-PRB für das mindestens eine zweite drahtlose Kommunikationsgerät; Messen eines Channel-Busy-Ratio-, CBR-, Werts auf dem Arbeits-PRB; Vergleichen des CBR-Werts mit einem ersten Schwellwert; und Neuzuweisen eines neuen Arbeits-PRB zu dem mindestens einen zweiten drahtlosen Kommunikationsgerät als Reaktion darauf, dass der CBR-Wert größer als der erste Schwellwert ist, wobei ein CBR-Wert, der auf dem neuen Arbeits-PRB gemessen wird, kleiner als ein zweiter Schwellwert ist.

11. Verfahren, das durch ein erstes drahtloses Kommunikationsgerät durchgeführt wird, wobei das Verfahren aufweist:
Empfangen einer ersten Nachricht auf einem ersten Träger von einem zweiten drahtlosen Kommunikationsgerät, wobei die erste Nachricht Informationen über einen ersten Ressourcenpoolsatz auf dem ersten Träger aufweist, wobei der erste Ressourcenpoolsatz mindestens einen ersten Ressourcenpool aufweist;
Empfangen einer zweiten Nachricht in dem mindestens einen ersten Ressourcenpool auf dem ersten Träger vom zweiten drahtlosen Kommunikationsgerät, wobei die zweite Nachricht Informationen über einen zweiten Träger und einen zweiten Ressourcenpoolsatz auf dem zweiten Träger anzeigt, wobei der zweite Ressourcenpoolsatz mindestens einen zweiten Ressourcenpool aufweist; und
Kommunizieren mit dem zweiten drahtlosen Kommunikationsgerät in dem mindestens einen zweiten Ressourcenpool auf dem zweiten Träger.

12. Verfahren nach Anspruch 11,
wobei der erste Träger ein Anchor Carrier ist und der zweite Träger ein Non-Anchor Carrier ist oder
wobei das erste drahtlose Kommunikationsgerät innerhalb oder außerhalb eines Versorgungsbereichs einer Basisstation liegt; das erste drahtlose Kommunikationsgerät eine begrenzte Bandbreite hat; und das zweite drahtlose Kommunikationsgerät innerhalb des Versorgungsbereichs der Basisstation liegt.

13. Verfahren nach Anspruch 11, wobei die erste Nachricht durch das zweite drahtlose Kommunikationsgerät mit Hilfe einer Senderessource übertragen wird, die auf der Grundlage eines Funksignals, das durch das zweite drahtlose Kommunikationsgerät auf dem ersten Träger gesendet wird; und/oder einer Konfiguration; und/oder einer Vorkonfiguration; und/oder eine Vordefinition bestimmt wird, wobei die Vordefinition Folgendes aufweist: die für die erste Nachricht verwendete Senderessource ist fest; und/oder der Anfangsoffset der für die erste Nachricht verwendeten Senderessource relativ zu der zum Senden des Funksignals verwendeten Ressource ist fest,
oder
wobei die erste Nachricht durch das zweite drahtlose Kommunikationsgerät mit Hilfe einer Senderessource in einem Senderessourcenpool übertragen wird, der auf der Grundlage eines Funksignals, das durch das zweite drahtlose Kommunikationsgerät auf dem ersten Träger gesendet wird; und/oder einer Konfiguration; und/oder einer Vorkonfiguration bestimmt wird.

14. Verfahren nach Anspruch 13, wobei das Funksignal Folgendes aufweist: ein Sidelink-Funksignal, das zur Synchronisation zwischen dem ersten drahtlosen Kommunikationsgerät und dem zweiten drahtlosen Kommunikationsgerät verwendet wird; und/oder einen physikalischen Sidelink-Broadcastkanal, PSBCH, der Anzeigeinformationen für das erste drahtlose Kommunikationsgerät mitführt, oder
wobei das Funksignal Informationen über Folgendes mitführt: einen Anfangsoffset der Senderessource und/oder des Senderessourcenpools relativ zu der zum Senden des Funksignals verwendeten Ressource; und/oder eine Länge der Senderessource und/oder des Senderessourcenpools im Zeitbereich; eine Menge von Sub-Frames, die zur Senderessource und/oder zum Senderessourcenpool gehören; und/oder eine Bitmap, die den zur Senderessource und/oder zum Senderessourcenpool gehörenden Sub-Frames entspricht; und/oder eine Menge von Bitmap-Wiederholungen.

15. Verfahren nach Anspruch 11, wobei die Informationen über den ersten Ressourcenpoolsatz Informationen über Folgendes aufweisen: einen Gerät-zu-Gerät, D2D-, Discovery-Ressourcenpool des ersten drahtlosen Kommunikationsgeräts auf dem ersten Träger; einen D2D-Discovery-Ressourcenpool des zweiten drahtlosen Kommunikationsgeräts auf dem ersten Träger; einen D2D-Kommunikationsressourcenpool des ersten drahtlosen Kommunikationsgeräts auf dem ersten Träger; und/oder einen D2D-Kommunikationsressourcenpool des zweiten drahtlosen Kommunikationsgeräts auf dem ersten Träger, und
wobei der D2D-Discovery-Ressourcenpool des ersten drahtlosen Kommunikationsgeräts oder des zweiten drahtlosen Kommunikationsgeräts Folgendes aufweist: den D2D-Discovery-Sendepool; und/oder den D2D-Discovery-Empfangspool, der D2D-Kommunikationsressourcenpool des ersten drahtlosen Kommunikationsgeräts oder des zweiten drahtlosen Kommunikationsgeräts Folgendes aufweist: den D2D-Kommunikationssendepool; und/oder den D2D-Kommunikationsempfangspool; und/oder den D2D-Kommunikationssteuerressourcenpool; und/oder den D2D-Kommunikationsdaten-ressourcenpool.

16. Verfahren nach Anspruch 11, wobei die erste Nachricht innerhalb einer Ressourcenperiode zum Senden des Funksignals gültig ist und Informationen über Folgendes aufweist: einen oder mehrere Anfangsoffsets eines oder mehrerer erster Ressourcenpools relativ zu der zum Senden des Funksignals verwendeten Ressource; und/oder eine oder mehrere Längen eines oder mehrerer erster Ressourcenpools im Zeitbereich; und/oder eine oder mehrere Bitmaps, die Sub-Frames entsprechen, die zu einem oder mehreren ersten Ressourcenpools gehören; und/oder eine oder mehrere Anzahlen von Bitmap-Wiederholungen, oder
wobei die erste Nachricht innerhalb einer ersten Trägerressourcenpoolperiode gültig ist und Informationen über Folgendes aufweist: die erste Trägerressourcenpoolperiode; und/oder einen oder mehrere Anfangsoffsets eines oder mehrerer erster Ressourcenpools innerhalb der ersten Trägerressourcenpoolperiode; und/oder einen oder mehrere Anfangsoffsets eines oder mehrerer erster Ressourcenpools relativ zur System-Frame-Nummer 0, SFN 0; und/oder eine oder mehrere Längen eines oder mehrerer erster Ressourcenpools im Zeitbereich; und/oder eine oder mehrere Bitmaps, die Sub-Frames entsprechen, die zu einem oder mehreren ersten Ressourcenpools gehören; und/oder eine oder mehrere Anzahlen von Bitmap-Wiederholungen.

17. Verfahren nach Anspruch 11, das ferner aufweist: Empfangen einer Scheduling-Nachricht auf dem zweiten Träger von dem zweiten drahtlosen Kommunikationsgerät, wobei die Scheduling-Nachricht Informationen über eine Scheduling-Ressource für das erste drahtlose Kommunikationsgerät anzeigt; und Senden von Gerät-zu-Gerät-Kommunikationssteuer- und/oder Dienstdaten zum zweiten drahtlosen Kommunikationsgerät auf der Grundlage der Scheduling-Ressource, oder
das ferner aufweist: Senden einer Scheduling-Anfrage zum zweiten drahtlosen Kommunikationsgerät auf der Grundlage eines dedizierten Ressourcenpools auf dem zweiten Träger; von dem zweiten drahtlosen Kommunikationsgerät auf dem zweiten Träger erfolgendes Empfangen von Informationen über eine Scheduling-Ressource, die durch das zweite drahtlose Kommunikationsgerät als Reaktion auf die Scheduling-Anfrage zugewiesen ist; und Senden von Gerät-zu-Gerät-Kommunikationssteuer- und/oder Dienstdaten zum zweiten drahtlosen Kommunikationsgerät auf der Grundlage der Scheduling-Ressource, oder
wobei der erste Ressourcenpoolsatz und/oder der zweite Ressourcenpoolsatz konfiguriert und/oder vorkonfiguriert sind.

18. Drahtloses Kommunikationsgerät, das so konfiguriert ist, dass es das Verfahren nach einem der Ansprüche 1 bis 17 durchführt.

19. Nichttransitorisches computerlesbares Medium mit darauf gespeicherten computerausführbaren Befehlen zum Durchführen des Verfahrens nach einem der Ansprüche 1 bis 17.

## Revendications

1. Procédé exécuté par un premier dispositif de communication sans fil, ledit procédé comprenant :
la diffusion d'un premier message sur une première porteuse, ledit premier message comprenant des informations relatives à un premier ensemble de groupes de ressources sur la première porteuse, ledit premier ensemble de groupes de ressources comprenant au moins un premier groupe de ressources ;
la transmission d'un deuxième message dans ledit au moins un premier groupe de ressources sur la première porteuse, ledit deuxième message comprenant des informations relatives à une deuxième porteuse et à un deuxième ensemble de groupes de ressources sur la deuxième porteuse, ledit deuxième ensemble de groupes de ressources comprenant au moins un deuxième groupe de ressources ; et
la communication avec au moins un deuxième dispositif de communication sans fil dans ledit au moins un deuxième groupe de ressources sur la deuxième porteuse.

2. Procédé selon la revendication 1,
où la première porteuse est une porteuse d'ancrage et la deuxième porteuse est une porteuse de non-ancrage, ou
où le premier dispositif de communication sans fil est compris à l'intérieur d'une zone de couverture d'une station de base, ledit au moins un deuxième dispositif de communication sans fil est à l'extérieur ou à l'intérieur de la zone de couverture de la station de base, et ledit au moins un deuxième dispositif de communication sans fil a une bande passante limitée.

3. Procédé selon la revendication 1,
où le premier message est diffusé au moyen d'une ressource de transmission déterminée sur la base d'au moins un des éléments suivants : un signal radio transmis par le premier dispositif de communication sans fil sur la première porteuse ; une configuration ; une pré-configuration ; et une pré-définition, ladite pré-définition comprenant préférentiellement au moins un des éléments suivants : la ressource de transmission utilisée pour le premier message est fixée ; et le décalage de départ de la ressource de transmission utilisée pour le premier message par rapport à la ressource utilisée pour la transmission du signal radio est fixée, ou
où le premier message est diffusé au moyen d'une ressource de transmission dans un groupe de ressources de transmission déterminé sur la base d'au moins un des éléments suivants : un signal radio transmis par le premier dispositif de communication sans fil sur la première porteuse ; une configuration ; et une pré-configuration.

4. Procédé selon la revendication 3,
où le signal radio comprend au moins un des éléments suivants : un signal radio en liaison latérale utilisé pour synchronisation entre le premier dispositif de communication sans fil et ledit au moins un deuxième dispositif de communication sans fil ; et un canal de diffusion en liaison latérale physique (PSBCH) contenant des informations d'indication pour ledit au moins un deuxième dispositif de communication sans fil, ou
où le signal radio contient des informations relatives à au moins un des éléments suivants :
un décalage de départ de la ressource de transmission et/ou du groupe de ressources de transmission par rapport à la ressource utilisée pour la transmission du signal radio ; une longueur de la ressource de transmission et/ou du groupe de ressources de transmission dans le domaine temporel ; une quantité de sous-trames comprises dans la ressource de transmission et/ou le groupe de ressources de transmission ; un bitmap correspondant aux sous-trames comprises dans la ressource de transmission et/ou le groupe de ressources de transmission ; et une quantité de répétitions de bitmap.

5. Procédé selon la revendication 1, où les informations relatives au premier ensemble de groupes de ressources comprennent des informations relatives à au moins un des éléments suivants :
un groupe de ressources de découverte de dispositif à dispositif, D2D, du premier dispositif de communication sans fil sur la première porteuse ;
un groupe de ressources de découverte D2D dudit au moins un deuxième dispositif de communication sans fil sur la première porteuse ;
un groupe de ressources de communication D2D du premier dispositif de communication sans fil sur la première porteuse ; et
un groupe de ressources de communication D2D dudit au moins un deuxième dispositif de communication sans fil sur la première porteuse,
où, préférentiellement :
le groupe de ressources de découverte D2D du premier dispositif de communication sans fil ou dudit au moins un deuxième dispositif de communication sans fil comprend au moins un des éléments suivants :
le groupe de transmissions de découverte D2D ;
le groupe de réceptions de découverte D2D ;
le groupe de ressources de communication D2D du premier dispositif de communication sans fil ou dudit au moins un deuxième dispositif de communication sans fil comprend au moins un des éléments suivants :
le groupe de transmissions de communication D2D ;
le groupe de réceptions de communication D2D ;
le groupe de ressources de commande de communication D2D ; et
le groupe de ressources de données de communication D2D.

6. Procédé selon la revendication 1,
où le premier message est valide pendant une période de ressources pour la transmission du signal radio et comprend des informations relatives à au moins un des éléments suivants : un ou plusieurs décalages de départ d'un ou de plusieurs premiers groupes de ressources par rapport à la ressource utilisée pour la transmission du signal radio ; une ou plusieurs longueurs d'un ou de plusieurs premiers groupes de ressources dans le domaine temporel ; un ou plusieurs bitmaps correspondant à des sous-trames comprises dans un ou plusieurs premiers groupes de ressources ; et un ou plusieurs nombres de répétitions de bitmap, ou
où le premier message est valide pendant une période de premier groupe de ressources de porteuse et comprend des informations relatives à au moins un des éléments suivants : la période de premier groupe de ressources de porteuse ; un ou plusieurs décalages de départ d'un ou de plusieurs premiers groupes de ressources pendant la période de premier groupe de ressources de porteuse ; un ou plusieurs décalages de départ d'un ou de plusieurs premiers groupes de ressources par rapport au numéro de trame système 0, SFN 0 ; une ou plusieurs longueurs d'un ou de plusieurs premiers groupes de ressources dans le domaine temporel ; un ou plusieurs bitmaps correspondant à des sous-trames comprises dans un ou plusieurs premiers groupes de ressources ; et un ou plusieurs nombres de répétitions de bitmap, ou
où les informations relatives à la deuxième porteuse comprennent des informations relatives à au moins un des éléments suivants : un indice de la deuxième porteuse ; un indice d'un bloc de ressources physiques, PRB, correspondant à la deuxième porteuse ; et une valeur de décalage d'un premier indice PRB correspondant à la deuxième porteuse par rapport à un deuxième indice PRB correspondant à la première porteuse.

7. Procédé selon la revendication 1, où les informations relatives au deuxième ensemble de groupes de ressources comprennent des informations relatives à au moins un des éléments suivants : un groupe de ressources de découverte de dispositif à dispositif, D2D, du premier dispositif de communication sans fil ; un groupe de ressources de découverte D2D dudit au moins un deuxième dispositif de communication sans fil ; un groupe de ressources de communication D2D du premier dispositif de communication sans fil ; un groupe de ressources de communication D2D dudit au moins un deuxième dispositif de communication sans fil ; et un groupe de ressources dédiées pour la transmission d'une demande de planification dudit au moins un deuxième dispositif de communication sans fil sur la deuxième porteuse, et
où : le groupe de ressources de découverte D2D du premier dispositif de communication sans fil ou dudit au moins un deuxième dispositif de communication sans fil comprend au moins un des éléments suivants : le groupe de transmissions de découverte D2D ; et le groupe de réceptions de découverte D2D, le groupe de ressources de communication D2D du premier dispositif de communication sans fil ou dudit au moins un deuxième dispositif de communication sans fil comprend au moins un des éléments suivants : le groupe de transmissions de communication D2D ; le groupe de réceptions de communication D2D ; le groupe de ressources de commande de communication D2D ; et le groupe de ressources de données de communication D2D.

8. Procédé selon la revendication 1, où le deuxième message comprend des informations relatives à au moins un des éléments suivants : une période de deuxième groupe de ressources de porteuse ; un ou plusieurs décalages de départ d'un ou de plusieurs deuxièmes groupes de ressources pendant la période de deuxième groupe de ressources de porteuse ; un ou plusieurs décalages de départ d'un ou de plusieurs deuxièmes groupes de ressources par rapport au numéro de trame système 0, SFN 0 ; une ou plusieurs longueurs d'un ou de plusieurs deuxièmes groupes de ressources dans le domaine temporel ; un ou plusieurs bitmaps correspondant à des sous-trames comprises dans un ou plusieurs deuxièmes groupes de ressources ; et un ou plusieurs nombres de répétitions de bitmap, ou
où le premier ensemble de groupes de ressources et/ou le deuxième ensemble de groupes de ressources sont configurés et/ou pré-configurés.

9. Procédé selon la revendication 1, comprenant en outre :
la transmission d'un message de planification sur la deuxième porteuse audit au moins un deuxième dispositif de communication sans fil, ledit message de planification indiquant des informations relatives à une ressource de planification pour ledit au moins un deuxième dispositif de communication sans fil ; et la réception d'une commande de communication de dispositif à dispositif et/ou de données de service dudit au moins un deuxième dispositif de communication sans fil au moyen de la ressource de planification,
ou
la réception d'une demande de planification dudit au moins un deuxième dispositif de communication sans fil au moyen d'au moins une ressource dans un groupe de ressources dédiées sur la deuxième porteuse ; l'affection d'une ressource de planification audit au moins un deuxième dispositif de communication sans fil en réponse à la demande de planification ; la transmission d'informations relatives à la ressource de planification audit au moins un deuxième dispositif de communication sans fil sur la deuxième porteuse ; et la réception d'une commande de communication de dispositif à dispositif et/ou de données de service dudit au moins un deuxième dispositif de communication sans fil au moyen de la ressource de planification.

10. Procédé selon la revendication 1, comprenant en outre : la sélection, à partir d'une liste de porteuses configurées ou pré-configurées, d'une porteuse en tant que porteuse de fonctionnement pour ledit au moins un deuxième dispositif de communication sans fil ; la mesure d'une valeur de taux d'occupation de canal, CBR, correspondant à la porteuse de fonctionnement ; la comparaison de la valeur CBR avec un premier seuil ; et la ré-assignation d'une nouvelle porteuse de fonctionnement audit au moins un deuxième dispositif de communication sans fil en réaction à une valeur CBR supérieure au premier seuil, une valeur CBR mesurée correspondant à la nouvelle porteuse de fonctionnement étant inférieure à un deuxième seuil, ou
comprenant en outre : la sélection, à partir d'une liste de blocs de ressources physiques configurés ou pré-configurés, PRB, d'un PRB en tant que PRB de fonctionnement pour ledit au moins un deuxième dispositif de communication sans fil ; la mesure d'une valeur de taux d'occupation de canal, CBR, sur le PRB de fonctionnement ; la comparaison de la valeur CBR avec un premier seuil ; et la ré-assignation d'un nouveau PRB de fonctionnement audit au moins un deuxième dispositif de communication sans fil en réaction à une valeur CBR supérieure au premier seuil, une valeur CBR mesurée sur le nouveau PRB de fonctionnement étant inférieure à un deuxième seuil.

11. Procédé exécuté par un premier dispositif de communication sans fil, ledit procédé comprenant : la réception d'un premier message sur une première porteuse en provenance d'un deuxième dispositif de communication sans fil, ledit premier message comprenant des informations relatives à un premier ensemble de groupes de ressources sur la première porteuse, ledit premier ensemble de groupes de ressources comprenant au moins un premier groupe de ressources ;
la réception d'un deuxième message dans ledit au moins un premier groupe de ressources sur la première porteuse en provenance du deuxième dispositif de communication sans fil, ledit deuxième message indiquant des informations relatives à une deuxième porteuse et à un deuxième ensemble de groupes de ressources sur la deuxième porteuse, ledit deuxième ensemble de groupes de ressources comprenant au moins un deuxième groupe de ressources ; et
la communication avec le deuxième dispositif de communication sans fil dans au moins un deuxième groupe de ressources sur la deuxième porteuse.

12. Procédé selon la revendication 11,
où la première porteuse est une porteuse d'ancrage et la deuxième porteuse est une porteuse de non-ancrage ; ou
où le premier dispositif de communication sans fil est à l'intérieur ou à l'extérieur d'une zone de couverture d'une station de base ; le premier dispositif de communication sans fil a une bande passante limitée ; et le deuxième dispositif de communication sans fil est à l'intérieur de la zone de couverture de la station de base.

13. Procédé selon la revendication 11, où le premier message est diffusé par le deuxième dispositif de communication sans fil au moyen d'une ressource de transmission déterminée sur la base d'au moins un des éléments suivants : un signal radio transmis par le deuxième dispositif de communication sans fil sur la première porteuse ; une configuration ; une pré-configuration ; et une pré-définition, ladite pré-définition comprenant au moins un des éléments suivants : la ressource de transmission utilisée pour le premier message est fixée ; et le décalage de départ de la ressource de transmission utilisée pour le premier message par rapport à la ressource utilisée pour la transmission du signal radio est fixée, ou
où le premier message est diffusé par le deuxième dispositif de communication sans fil au moyen d'une ressource de transmission dans un groupe de ressources de transmission déterminé sur la base d'au moins un des éléments suivants : un signal radio transmis par le deuxième dispositif de communication sans fil sur la première porteuse ; une configuration ; et une pré-configuration.

14. Procédé selon la revendication 13, où le signal radio comprend au moins un des éléments suivants : un signal radio en liaison latérale utilisé pour synchronisation entre le premier dispositif de communication sans fil et le deuxième dispositif de communication sans fil ; et un canal de diffusion en liaison latérale physique, PSBCH, contenant des informations d'indication pour le premier dispositif de communication sans fil, ou
où le signal radio contient des informations relatives à au moins un des éléments suivants :
un décalage de départ de la ressource de transmission et/ou du groupe de ressources de transmission par rapport à la ressource utilisée pour la transmission du signal radio ; une longueur de la ressource de transmission et/ou du groupe de ressources de transmission dans le domaine temporel ; une quantité de sous-trames comprises dans la ressource de transmission et/ou le groupe de ressources de transmission ; un bitmap correspondant aux sous-trames comprises dans la ressource de transmission et/ou le groupe de ressources de transmission ; et une quantité de répétitions de bitmap.

15. Procédé selon la revendication 11, où les informations relatives au premier ensemble de groupes de ressources comprennent des informations relatives à au moins un des éléments suivants : un groupe de ressources de découverte de dispositif à dispositif, D2D, du premier dispositif de communication sans fil sur la première porteuse ; un groupe de ressources de découverte D2D du deuxième dispositif de communication sans fil sur la première porteuse ; un groupe de ressources de communication D2D du premier dispositif de communication sans fil sur la première porteuse ; et un groupe de ressources de communication D2D du deuxième dispositif de communication sans fil sur la première porteuse, et
où : le groupe de ressources de découverte D2D du premier dispositif de communication sans fil ou du deuxième dispositif de communication sans fil comprend au moins un des éléments suivants : le groupe de transmissions de découverte D2D ; le groupe de réceptions de découverte D2D, le groupe de ressources de communication D2D du premier dispositif de communication sans fil ou du deuxième dispositif de communication sans fil comprend au moins un des éléments suivants : le groupe de transmissions de communication D2D ; le groupe de réceptions de communication D2D ; le groupe de ressources de commande de communication D2D ; et le groupe de ressources de données de communication D2D.

16. Procédé selon la revendication 11, où le premier message est valide pendant une période de ressources pour la transmission du signal radio et comprend des informations relatives à au moins un des éléments suivants : un ou plusieurs décalages de départ d'un ou de plusieurs premiers groupes de ressources par rapport à la ressource utilisée pour la transmission du signal radio ; une ou plusieurs longueurs d'un ou de plusieurs premiers groupes de ressources dans le domaine temporel ; un ou plusieurs bitmaps correspondant à des sous-trames comprises dans un ou plusieurs premiers groupes de ressources ; et un ou plusieurs nombres de répétitions de bitmap, ou
où le premier message est valide pendant une période de premier groupe de ressources de porteuse et comprend des informations relatives à au moins un des éléments suivants : la période de premier groupe de ressources de porteuse ; un ou plusieurs décalages de départ d'un ou de plusieurs premiers groupes de ressources pendant la période de premier groupe de ressources de porteuse ; un ou plusieurs décalages de départ d'un ou de plusieurs premiers groupes de ressources par rapport au numéro de trame système 0, SFN 0 ; une ou plusieurs longueurs d'un ou de plusieurs premiers groupes de ressources dans le domaine temporel ; un ou plusieurs bitmaps correspondant à des sous-trames comprises dans un ou plusieurs premiers groupes de ressources ; et un ou plusieurs nombres de répétitions de bitmap.

17. Procédé selon la revendication 11, comprenant en outre : la réception d'un message de planification sur la deuxième porteuse en provenance du deuxième dispositif de communication sans fil, ledit message de planification indiquant des informations relatives à une ressource de planification pour le premier dispositif de communication sans fil ; et la transmission d'une commande de communication de dispositif à dispositif et/ou de données de service au deuxième dispositif de communication sans fil sur la base de la ressource de planification, ou
comprenant en outre : la transmission d'une demande de planification au deuxième dispositif de communication sans fil sur la base d'un groupe de ressources dédiées sur la deuxième porteuse ; la réception, en provenance du deuxième dispositif de communication sans fil sur la deuxième porteuse, d'informations relatives à une ressource de planification affectée par le deuxième dispositif de communication sans fil en réponse à la demande de planification ; et la transmission d'une commande de communication de dispositif à dispositif et/ou de données de service au deuxième dispositif de communication sans fil sur la base de la ressource de planification, ou
où le premier ensemble de groupes de ressources et/ou le deuxième ensemble de groupes de ressources sont configurés et/ou pré-configurés.

18. Dispositif de communication sans fil, configuré pour exécuter le procédé selon l'une des revendications 1 à 17.

19. Support d'enregistrement non transitoire lisible par ordinateur où sont stockées des instructions exécutables par ordinateur pour l'exécution du procédé selon l'une des revendications 1 à 17.
